# EUROPEAN PATENT SPECIFICATION

(11) **EP 3 816 246 B1**
(45) Date of publication and mention of the grant of the patent: **23.08.2023**
(21) Application number: 19825779.2
(22) Date of filing: 25.06.2019
(51) Int. Cl.: C09D 133/02, B05D 1/36, B05D 7/24, C09D 5/02, C09D 161/28, C09D 167/00, C09D 175/04, C08F 220/14, C08G 18/12, C08G 18/24, C08G 18/34, C08G 18/44, C08G 18/75, C08G 63/127, C09D 133/12, C09D 151/06, C09D 175/06, B05D 7/00, C08F 265/06, C08G 18/32

(54) **AQUEOUS COATING COMPOSITION AND METHOD FOR PRODUCING AQUEOUS COATING COMPOSITION**
WÄSSRIGE BESCHICHTUNGSZUSAMMENSETZUNG UND VERFAHREN ZUR HERSTELLUNG EINER WÄSSRIGEN BESCHICHTUNGSZUSAMMENSETZUNG
COMPOSITION AQUEUSE DE REVÊTEMENT, ET PROCÉDÉ DE PRODUCTION D'UNE COMPOSITION AQUEUSE DE REVÊTEMENT

(30) Priority: 27.06.2018 JP 2018122348
(43) Date of publication of application: 05.05.2021
(73) Proprietor: Nippon Paint Automotive Coatings Co., Ltd., Hirakata-shi, Osaka 573-1153 (JP)
(72) Inventor: SEKINE, Kazuki, Hirakata-shi, Osaka 573-1153 (JP); FUJIMOTO, Hiromi, Hirakata-shi, Osaka 573-1153 (JP); MATSUSHIMA, Mika, Hirakata-shi, Osaka 573-1153 (JP); OHTONARI, Masatoshi, Hirakata-shi, Osaka 573-1153 (JP); SAITO, Sayaka, Hirakata-shi, Osaka 573-1153 (JP); OKADA, Takuma, Hirakata-shi, Osaka 573-1153 (JP); NAKAMOTO, Mari, Hirakata-shi, Osaka 573-1153 (JP)
(74) Representative: Mewburn Ellis LLP
(86) International application number: PCT/JP2019/025156
(87) International publication number: WO 2020/004386

(56) References cited:
- JP-A- 2004 337 738
- JP-A- 2007 297 545
- JP-A- 2010 069 372
- JP-A- 2010 253 386
- JP-A- 2014 147 918
- US-A1- 2009 041 942
- US-A1- 2015 111 026

## Description

### TECHNICAL FIELD

The present invention relates to an aqueous coating composition and a method for producing an aqueous coating composition.

### BACKGROUND ART

Aqueous coating compositions are coating compositions containing an aqueous solvent. Generally, such an aqueous coating composition tends to be affected in the rate of solvent volatilization by the change of coating environment such as temperature and humidity in coating. The change of the rate of solvent volatilization may cause change of the appearance and/or the physical properties of a coating film formed by application.

One example of coping with such change of the coating environment may be a method of adjusting the rate of solvent volatilization by adjusting the amount of the solvent contained in the aqueous coating composition. For example, JP-A-2008-302274 (Patent Literature 1) discloses a method of determining a coating NV (nonvolatile content) according to the coating environment. As disclosed in Patent Literature 1, in the application of an aqueous coating composition, parameters such as the viscosity of the coating composition are often adjusted by adjusting the amount of the solvent of the aqueous coating composition, etc. according to the coating environment such as temperature and humidity However, such adjustment of parameters is complicated.

In the application of an aqueous coating composition, another means for reducing the influence of the coating environment may be the use of a thickener. For example, JP-A-2006-70095 (Patent Literature 2) discloses a multi-components aqueous coating composition comprising (I) a diluent and (II) a base coating material, wherein the diluent (I) comprises a thickener (A) and water, the base coating material (II) comprises a resin component (B), a thickener (C) and water, and the thickener (A) and the thickener (C) are selected from a combination of an inorganic thickener and a polyacrylic thickener, a combination of a urethane-associated thickener and a polyacrylic thickener, and a combination of a urethane-associated thickener and an inorganic thickener (claim 1). On the other hand, in the method of adjusting the viscosity using a thickener, it is possible to increase the viscosity of the coating composition, but it is difficult to design a coating composition having a low viscosity.

Incidentally, in the field of the application of a coating composition, there is an application method called "wet-on-wet" that can shorten the application process by applying a first coating composition, then applying a second coating composition without curing the resulting coating film, and then curing the two coating films simultaneously. However, the case where the first coating composition and the second coating composition are wet-on-wet applied is problematic in that the coating compositions are mixed at between the layers of the two uncured coating films (mix of layers) and, as a result, an undesirable phenomenon, namely, deterioration of coating film appearance may occur.

### CITATION LIST

### PATENT LITERATURE

Patent Literature 1: JP-A-2008-302274
Patent Literature 2: JP-A-2006-70095

### SUMMARY OF THE INVENTION

### TECHNICAL PROBLEMS

In the field of the application of an aqueous coating composition, there is desired a means for reducing the influence of the coating environment without impairing the appearance of a resulting coating film. The present invention solves the problems described above and the object thereof is to provide an aqueous coating composition which exhibits a small viscosity change and can form a coating film having a superior coating film appearance even when the amount of the solvent contained in the aqueous coating composition is reduced due to changes in the coating environment.

### SOLUTION TO PROBLEMS

In order to solve the above-described problems, the present invention provides the following aspects.
[1] An aqueous coating composition comprising an acrylic resin dispersion (A) and a melamine resin (B),
   wherein
   the acrylic resin dispersion (A) has a core/shell structure,
   the acrylic resin dispersion (A) is a dispersion of a solution-polymerization product of a core part preparation monomer (a-1) and a shell part preparation monomer (a-2), wherein the shell part preparation monomer (a-2) includes an acid group-containing polymerizable monomer,
   a mass ratio of a core part to a shell part of the acrylic resin dispersion (A) is in a range of core part/shell part = 30/70 to 70/30,
   the shell part of the acrylic resin dispersion (A) has an acid group, and a neutralization rate of the acid groups in the shell part is 50% or more,
   a weight-average molecular weight of the acrylic resin dispersion (A) is in a range of 10,000 to 70,000,
   the core part preparation monomer (a-1) has an acid value of 10 mg KOH/g or less, and the shell part preparation monomer (a-2) has an acid value of 10 mg KOH/g or more and 70 mg KOH/g or less,
   a whole monomer mixture including the core part preparation monomer (a-1) and the shell part preparation monomer (a-2) has an acid value of 10 mg KOH/g or more and 30 mg KOH/g or less,
   a glass transition temperature of the acrylic resin dispersion (A) is in a range of -10 to 60°C, and
   the melamine resin (B) includes a hydrophobic melamine resin.
[2] The aqueous coating composition defined above, wherein
   the whole monomer mixture including the core part preparation monomer (a-1) and the shell part preparation monomer (a-2) has a hydroxyl value of 50 mg KOH/g or more and 150 mg KOH/g or less,
   the core part preparation monomer (a-1) has a hydroxyl value of 50 mg KOH/g or more and 150 mg KOH/g or less, and
   the shell part preparation monomer (a-2) has a hydroxyl value of 50 mg KOH/g or more and 150 mg KOH/g or less.
[3] The aqueous coating composition defined above, further comprising one or more selected from the group consisting of a polyester resin dispersion and a polyurethane resin dispersion.
[4] The aqueous coating composition defined above, wherein as to a viscosity of a dry coating film of the coating composition, viscosity η1 where a solid content in a dry coating film is 60% by mass and viscosity η2 where a solid content in a dried coating film is 90% by mass satisfy the following condition: $1 \leq η 2 / η 1 \leq 10 ,$ and
   the viscosities η1 and η2 are viscosities measured at a temperature of 23°C and a shear rate of 0.1 sec⁻¹.
[5] A method for producing an aqueous coating composition comprising an acrylic resin dispersion (A) having a core/shell structure and a melamine resin (B),
   wherein
   the acrylic resin dispersion (A) is produced through:
   a step of solution-polymerizing a core part preparation monomer (a-1) to form a core part of the acrylic resin dispersion;
   a step of solution-polymerizing, in the presence of the resulting core part, a shell part preparation monomer (a-2) including an acid group-containing polymerizable monomer to form a shell part of the acrylic resin dispersion; and
   a step of desolvating the resulting solution-polymerization product, neutralizing it with a basic compound, and dispersing it in an aqueous medium,
   a mass ratio of the core part to the shell part of the acrylic resin dispersion (A) is in a range of core part/shell part = 30/70 to 70/30,
   the shell part of the acrylic resin dispersion (A) has acid groups, wherein a neutralization rate of acid groups in the shell part is 50% or more,
   a weight-average molecular weight of the acrylic resin dispersion (A) is in a range of 10,000 to 70,000,
   the core part preparation monomer (a-1) has an acid value of 10 mg KOH/g or less, and the shell part preparation monomer (a-2) has an acid value of 10 mg KOH/g or more and 70 mg KOH/g or less,
   a whole monomer mixture including the core part preparation monomer (a-1) and the shell part preparation monomer (a-2) has an acid value of 10 mg KOH/g or more and 30 mg KOH/g or less,
   a glass transition temperature of the acrylic resin dispersion (A) is in a range of -10 to 60°C, and
   the melamine resin (B) includes a hydrophobic melamine resin.
[6] A method for forming a multilayer coating film, comprising:
   a step (1) of applying a first aqueous base coating composition onto a surface of an object to form an uncured first aqueous base coating film;
   a step (2) of applying a second aqueous base coating composition onto the uncured first aqueous base coating film to form an uncured second aqueous base coating film;
   a step (3) of applying a clear coating composition onto the uncured second aqueous base coating film to form an uncured clear coating film; and
   a step (4) of heat-curing the uncured first aqueous base coating film, the uncured second aqueous base coating film, and the uncured clear coating film obtained in the steps (1) to (3) at a time to form a multilayer coating film, wherein
   the first aqueous base coating composition is the aqueous coating composition defined above.

### ADVANTAGEOUS EFFECTS OF INVENTION

The aqueous coating composition defined above has a characteristic that it exhibits a small viscosity change even when the amount of the solvent contained in the coating composition is reduced. For this reason, the composition is advantageous in that it can be applied without suffering from great change in coating workability even when the amount of the solvent is reduced. The aqueous coating composition has an advantage that it can exhibit good coating workability even under various coating environments differing in temperature and/or humidity.

### DESCRIPTION OF EMBODIMENTS

The aqueous coating composition comprises an acrylic resin dispersion (A) and a melamine resin (B). In the following, respective components are described in detail.

### Acrylic resin dispersion (A)

The aqueous coating composition comprises an acrylic resin dispersion (A). The acrylic resin dispersion (A) is characterized in that it has a core/shell structure and that it is a dispersion of a solution-polymerization product of a monomer mixture.

The acrylic resin dispersion (A) can be produced through:
a step of solution-polymerizing a core part preparation monomer (a-1) to form a core part of the acrylic resin dispersion;
a step of solution-polymerizing, in the presence of the resulting core part, a shell part preparation monomer (a-2) containing an acid group-containing polymerizable monomer to form a shell part of the acrylic resin dispersion;
a step of desolvating the resulting solution-polymerization product and neutralizing it with a basic compound; and
a step of mixing the neutralized polymerization product with an aqueous medium and dispersing it in the aqueous medium.

The core part preparation monomer (a-1) is a monomer mixture including a polymerizable monomer. Examples of the polymerizable monomer include:
(meth)acrylate monomers, which are esters of alkyl alcohols and (meth)acrylic acid, such as methyl (meth)acrylate, ethyl (meth)acrylate, n-propyl (meth)acrylate, n-butyl (meth)acrylate, t-butyl (meth)acrylate, isobutyl (meth)acrylate, 2-ethylhexyl (meth)acrylate or lauryl (meth)acrylate;
hydroxyl group-containing polymerizable monomers such as 2-hydroxyethyl (meth)acrylate, hydroxypropyl (meth)acrylate, 4-hydroxybutyl acrylate, diethylene glycol (meth)acrylate, caprolactone-modified hydroxy(meth) acrylate, and N-methylol acrylamide;
alicyclic polymerizable monomers such as dicyclopentanyl (meth)acrylate, dicyclopentenyl (meth)acrylate, dicyclopentenyloxyethyl (meth)acrylate, cyclohexyl (meth)acrylate, bornyl (meth)acrylate, isobornyl (meth)acrylate, 2-methyl-2-adamantyl (meth)acrylate, dicyclopentanyl (meth)acrylate, and cyclohexyl (meth)acrylate;
aromatic group-containing polymerizable monomers such as styrene, α-methylstyrene, o-methylstyrene, m-methylstyrene, p-methylstyrene, p-tert-butylstyrene, itaconic acid esters (such as dimethyl itaconate), maleic acid esters (such as dimethyl maleate), fumaric acid esters (such as dimethyl fumarate), and vinyl acetate;
acid group-containing polymerizable monomers such as (meth)acrylic acid, 2-acryloyloxyethylphthalic acid, 2-acryloyloxyethylsuccinic acid, itaconic acid, maleic acid, and fumaric acid;
crosslinking monomers having two or more radically polymerizable ethylenically unsaturated groups in the molecule such as divinylbenzene, allyl (meth)acrylate, ethylene glycol di(meth)acrylate, 1,6-hexanediol di(meth)acrylate, 1,1,1-trishydroxymethylethane di(meth)acrylate, trimethylolpropane tri(meth)acrylate, triallyl isocyanurate, butadiene, and divinylbenzene;
polymerizable nitrile monomers such as (meth)acrylonitrile;
α-olefins such as ethylene and propylene;
vinyl ester monomers such as vinyl acetate, vinyl propionate, and vinyl versatate;
polymerizable amide monomers such as (meth)acrylamide, N-methylol(meth)acrylamide, N-butoxymethyl(meth)acrylamide, N,N-dimethyl(meth)acrylamide, N,N-dibutyl(meth)acrylamide, N,N-dioctyl(meth)acrylamide, N-monobutyl(meth)acrylamide, N-monooctyl(meth)acrylamide, 2,4-dihydroxy-4'-vinylbenzophenone, N-(2-hydroxyethyl)acrylamide, and N-(2-hydroxyethyl)methacrylamide; polymerizable glycidyl monomers such as glycidyl (meth)acrylate; and acid anhydride group-containing polymerizable monomers such as (meth)acrylic anhydride and maleic anhydride. The core part preparation monomer (a-1) includes two or more of the above-mentioned monomers.

In the present description, (meth)acryl shall mean both acryl and methacryl.

In the preparation of the core part of the acrylic resin dispersion (A), the acid anhydride group-containing polymerizable monomer is a component intended to react with a hydroxyl group of a polymer yielded through polymerization to form an ester linkage and introduce a polymerizable group into the polymerization product. That is, in the preparation of the core part, the acid anhydride group-containing polymerizable monomer is not used as a component for introducing an acid group into the core part, and is not a component for providing an acid group to the core part.

In the preparation of the core part of the acrylic resin dispersion (A), a polymerizable group can be introduced into the core part by the use of the acid anhydride group-containing polymerizable monomer. The polymerizable group introduced into the core part functions as a grafting part between the shell part and the core part during the polymerization of the shell part. The formation of the grafting part between the shell part and the core part is more preferable because it can effectively decrease the generation of mix of layers.

The core part preparation monomer (a-1) preferably includes two or more monomers selected from the group consisting of the (meth) acrylic acid ester monomer, the hydroxyl group-containing polymerizable monomer, the aromatic group-containing polymerizable monomer, the acid group-containing polymerizable monomer and the anhydride group-containing polymerizable monomer, and more preferably includes the (meth)acrylate monomer, the hydroxyl group-containing polymerizable monomer, the aromatic group-containing polymerizable monomer, the acid group-containing polymerizable monomer, and the acid anhydride group-containing polymerizable monomer.

The core part preparation monomer (a-1) even more preferably includes two or more monomers selected from the group consisting of styrene, n-butyl (meth)acrylate, methyl (meth)acrylate, 2-ethylhexyl (meth)acrylate, hydroxyethyl (meth)acrylate, (meth)acrylic acid, and (meth)acrylic anhydride, and particularly preferably includes styrene, n-butyl (meth)acrylate, methyl (meth)acrylate, 2-ethylhexyl (meth)acrylate, hydroxyethyl (meth)acrylate, (meth)acrylic acid, and (meth)acrylic anhydride.

The core part preparation monomer (a-1) preferably has an acid value of 10 mg KOH/g or less. The condition that the acid value of the core part preparation monomer (a-1) is 10 mg KOH/g or less is advantageous in that this can reduce a viscosity change when the amount of the solvent contained in the aqueous coating composition is reduced. The acid value of the acrylic resin is preferably in the range of 0 to 10 mg KOH/g, and more preferably in the range of 0 to 8 mg KOH/g.

The core part preparation monomer (a-1) preferably has a hydroxyl value of 50 mg KOH/g or more and 150 mg KOH/g or less. The condition that the hydroxyl value of the core part preparation monomer (a-1) is in the above range is advantageous in that the physical properties of a resulting coating film are improved. In addition, the condition that the hydroxyl value is 150 mg KOH/g or less is advantageous in that poor coating film appearance such as mix of layers can be more effectively prevented thereby. The hydroxyl value is more preferably 60 mg KOH/g or more and 140 mg KOH/g or less, and even more preferably 75 mg KOH/g or more and 130 mg KOH/g or less.

In the present description, the acid value and the hydroxyl value of a resin represent a solid acid value and a solid hydroxyl value, respectively, and are values measured by the method described in JIS K 0070. The number-average molecular weight and the weight-average molecular weight are values obtained by converting values measured by gel permeation chromatography (GPC) in terms of polystyrene standards.

Examples of the conditions for solution-polymerizing the core part preparation monomer (a-1) include an embodiment in which it is solution-polymerized in the presence of a polymerization initiator in an organic solvent. The polymerization temperature is preferably in the range of 70°C to 200°C, and more preferably in the range of 90°C to 170°C. The polymerization time is preferably 0.2 hours to 10 hours, and more preferably 1 hour to 6 hours.

The organic solvent to be used for the solution-polymerization is not particularly limited as long as it does not adversely affect the reaction, and a commonly used organic solvent can be used. Specific examples of the organic solvent include hydrocarbon solvents such as hexane, heptane, xylene, toluene, cyclohexane, and naphtha; ketone solvents such as methyl isobutyl ketone, methyl ethyl ketone, isophorone, and acetophenone; and ester solvents such as ethyl acetate, butyl acetate, isobutyl acetate, octyl acetate, ethylene glycol monomethyl ether acetate, and diethylene glycol monomethyl ether acetate. These may be used singly, or two or more of them may be used in combination.

As the polymerization initiator, those commonly used in radical polymerization can be used. Examples of the polymerization initiator include:
azo compounds such as azobisisobutyronitrile, 2,2'-azobis(2-methylbutyronitrile), 2,2'-azobis(2,4-dimethylvaleronitrile), 2,2'-azobis(4-methoxy-2,4-dimethylvaleronitrile), 2-phenylazo-4-methoxy-2,4-dimethylvaleronitrile, 2,2'-azobis{2-methyl-N-[1,1-bis(hydroxymethyl)-2-hydroxyethyl]propionamide}, 2,2'-azobis{2-methyl-N-[2-(1-hydroxyethyl)]propionamide}, 2,2'-azobis{2-methyl-N-[2-(1-acetate, ethylene glycol monomethyl ether acetate, and diethylene glycol monomethyl ether acetate. These may be used singly, or two or more of them may be used in combination.

As the polymerization initiator, those commonly used in radical polymerization can be used. Examples of the polymerization initiator include:
azo compounds such as azobisisobutyronitrile, 2,2'-azobis(2-methylbutyronitrile), 2,2'-azobis(2,4-dimethylvaleronitrile), 2,2'-azobis(4-methoxy-2,4-dimethylvaleronitrile), 2-phenylazo-4-methoxy-2,4-dimethylvaleronitrile, 2,2'-azobis{2-methyl-N-[1,1-bis(hydroxymethyl)-2-hydroxyethyl]propionamide}, 2,2'-azobis{2-methyl-N- [2-(1-hydroxyethyl)]propionamide}, 2,2'-azobis{2-methyl-N-[2-(1-hydroxybutyl)]propionamide}, 2,2'-azobis[2-(5-methyl-2-imidazolin-2-yl)propane] and salts thereof, 2,2'-azobis[2-(2-imidazolin-2-yl)propane] and salts thereof, 2,2'-azobis[2-(3,4,5,6-tetrahydropyrimidin-2-yl)propane] and salts thereof, 2,2'-azobis(1-imino-1-pyrrolidino-2-methylpropane) and salts thereof, 2,2'-azobis{2-[1-(2-hydroxyethyl)-2-imidazolin-2-yl]propane} and salts thereof, 2,2'-azobis(2-methylpropionamidine) and salts thereof, and 2,2'-azobis[N-(2-carboxyethyl)-2-methylpropionamidine]; and
organic peroxides such as benzoyl peroxide, cumene hydroperoxide, tert-butyl hydroperoxide, tert-butyl peroxy-2-ethylhexanoate, and tert-butyl peroxyisobutyrate. These may be used singly, or two or more of them may be used in combination.

Examples of a preferable embodiment of the preparation of a core part include an embodiment where the core part preparation monomer (a-1) includes a hydroxyl group-containing polymerizable monomer and an acid anhydride group-containing polymerizable monomer, and a monomer of the core part preparation monomer (a-1) other than the acid anhydride group-containing polymerizable monomer is polymerized and then a hydroxyl group of the resulting polymerization product is reacted with an anhydride group of the acid anhydride group-containing polymerizable monomer, and thus a polymerizable group is introduced into the polymer. This is advantageous in that a polymerizable group which serves as a grafting part during shell polymerization can thereby be introduced into a core part.

Next, the shell part of an acrylic resin dispersion is formed by solution-polymerizing a shell part preparation monomer (a-2) including an acid group-containing polymerizable monomer in the presence of the core part obtained above. The shell part preparation monomer (a-2) to be used for forming the shell part includes an acid group-containing polymerizable monomer as described above.

Examples of the acid group-containing polymerizable monomer contained in the shell part preparation monomer (a-2) include (meth)acrylic acid, 2-acryloyloxyethylphthalic acid, 2-acryloyloxyethylsuccinic acid, itaconic acid, maleic acid, fumaric acid, and (meth)acrylic anhydride. As the acid group-containing polymerizable monomer, it is preferable to use one or more selected from the group consisting of (meth)acrylic acid, (meth)acrylic anhydride, maleic acid, and itaconic acid.

In the preparation of the shell part of the acrylic resin dispersion (A), an acid anhydride group-containing polymerizable monomer such as (meth)acrylic anhydride is used not for forming an ester linkage by reacting a hydroxyl group with an acid anhydride group, but as a polymerizable monomer like other polymerizable monomers. Therefore, in the preparation of the shell part, the acid anhydride group-containing polymerizable monomer is used as an acid group-containing polymerizable monomer that provides an acid group to a polymerization product after polymerization.

Examples of the monomer other than the acid group-containing polymerizable monomer contained in the shell part preparation monomer (a-2) include a (meth)acrylate monomer, a hydroxyl group-containing polymerizable monomer, an alicyclic polymerizable monomer, an aromatic group-containing polymerizable monomer, crosslinking monomers, polymerizable nitrile monomers, α-olefins, vinyl ester monomers, and polymerizable amide monomers. As these monomers, the above-mentioned monomers can be used.

The shell part preparation monomer (a-2) preferably includes one or more acid group-containing polymerizable monomers selected from the group consisting of (meth)acrylic anhydride and (meth)acrylic acid, and one or more selected from the group consisting of the above-mentioned (meth)acrylate monomer, hydroxyl group-containing polymerizable monomer, and aromatic group-containing polymerizable monomer.

The shell part preparation monomer (a-2) more preferably includes the acid group-containing polymerizable monomer and one or more monomers selected from the group consisting of styrene, n-butyl (meth)acrylate, methyl (meth)acrylate, 2-ethylhexyl (meth)acrylate, hydroxyethyl (meth)acrylate, and particularly preferably includes styrene, n-butyl (meth)acrylate, methyl (meth)acrylate, 2-ethylhexyl (meth)acrylate, hydroxyethyl (meth)acrylate, and (meth)acrylic acid.

The shell part preparation monomer (a-2) preferably has an acid value of 10 mg KOH/g or more and 70 mg KOH/g or less. The condition that the acid value of the shell part preparation monomer (a-2) is in the above range is advantageous in that this can reduce a viscosity change when the amount of the solvent contained in the aqueous coating composition is reduced. The acid value is preferably in the range of 10 to 60 mg KOH/g, more preferably in the range of 20 to 60 mg KOH/g, and even more preferably in the range of 20 to 50 mg KOH/g.

The shell part preparation monomer (a-2) preferably has a hydroxyl value of 50 mg KOH/g or more and 150 mg KOH/g or less. The condition that the hydroxyl value of the shell part preparation monomer (a-2) is in the above range is advantageous in that a good reactivity with a melamine resin (B) can be secured and a good physical performance can be secured in a resulting coating film. The hydroxyl value is more preferably 60 mg KOH/g or more and 140 mg KOH/g or less, and even more preferably 70 mg KOH/g or more and 130 mg KOH/g or less.

Examples of the conditions for solution-polymerizing the shell part preparation monomer (a-2) include an embodiment in which it is solution-polymerized in the presence of a polymerization initiator in an organic solvent. The polymerization temperature is preferably in the range of 70°C to 200°C, and more preferably in the range of 90°C to 170°C. The polymerization time is preferably 0.2 hours to 10 hours, and more preferably 1 hour to 6 hours. As an organic solvent and a polymerization initiator to be used for the solution-polymerization and a chain transfer agent that may be used if necessary, those mentioned above can be used.

In the core part preparation monomer (a-1) and the shell part preparation monomer (a-2), the whole monomer mixture including the core part preparation monomer (a-1) and the shell part preparation monomer (a-2) preferably has an acid value of 10 mg KOH/g or more and 30 mg KOH/g or less. The condition that the acid value of the whole monomer mixture is in the above range is an advantageous in that good coating film properties of a formed coating film can be secured.

The whole monomer mixture including the core part preparation monomer (a-1) and the shell part preparation monomer (a-2) preferably has a hydroxyl value of 50 mg KOH/g or more and 150 mg KOH/g or less. The condition that the hydroxyl value of the whole monomer mixture is in the above range is an advantageous in that good coating film properties of a formed coating film can be secured.

In the above procedure, a solution-polymerization product having a core/shell structure can be obtained. The acrylic resin dispersion (A) can be prepared by desolvating the thus-obtained solution-polymerization product, then neutralizing it with a basic compound, and dispersing it in an aqueous medium. In the preparation of the dispersion, the stability of the dispersion is improved by neutralizing all or a part of the acid groups in the shell part of the solution-polymerization product having a core/shell structure with a basic compound. As to the neutralization with a basic compound, it is permitted that the resulting solution-polymerization product is desolvated and then neutralized with a basic compound and the neutralized solution-polymerization product is mixed with an aqueous medium and dispersed in the aqueous medium, and it is also permitted that the resulting (solution-)polymerized product is mixed with an aqueous medium containing a basic compound and dispersed in the aqueous medium.

Examples of the basic compound to be used for the neutralization include amine compounds such as ammonia, triethylamine, propylamine, dibutylamine, amylamine, 1-aminooctane, 2-dimethylaminoethanol, ethylaminoethanol, 2-diethylaminoethanol, 1-amino-2-propanol, 2-amino-1-propanol, 2-amino-2-methyl-1-propanol, 3-amino-1-propanol, 1-dimethylamino-2-propanol, 3-dimethylamino-1-propanol, 2-propylaminoethanol, ethoxypropylamine, aminobenzyl alcohol, and morpholine, and inorganic compounds such as sodium hydroxide and potassium hydroxide. These may be used singly, or two or more of them may be used in combination.

The neutralization rate of the acid groups in the shell part by the basic compound (that is, the equivalent ratio of the basic compound to the acid groups) is 50% or more. The neutralization rate is preferably 60 to 100%. The condition that the neutralization rate of the acid groups in the shell part is in the above range is advantageous in that viscosity change decreases even when the amount of the solvent contained in the coating composition is reduced.

The mass ratio of the core part to the shell part of the acrylic resin dispersion (A) is in the range of core part/shell part = 30/70 to 70/30. The mass ratio is preferably in the range of core part/shell part = 35/65 to 65/35, and more preferably in the range of 40/60 to 60/40. When the mass ratio core part/shell part is out of the range of 30/70 to 70/30, there is a possibility that a large viscosity change occurs when the amount of the solvent contained in the coating composition is reduced.

The weight-average molecular weight of the acrylic resin dispersion (A) is in the range of 10,000 to 70,000. When the weight-average molecular weight of the acrylic resin dispersion (A) is less than 10,000, mix of layers may occur during wet-on-wet application. When the weight-average molecular weight is greater than 70,000, there is a possibility that a large viscosity change occurs when the amount of the solvent contained in the coating composition is reduced. The weight-average molecular weight is preferably in the range of 13,000 to 60,000, and more preferably in the range of 15,000 to 50,000.

The glass transition temperature of the acrylic resin dispersion (A) is in the range of -10 to 60°C. More preferably, the glass transition temperature is in the range of -5 to 50°C. The condition that the glass transition temperature of the acrylic resin dispersion (A) is in the above range is advantageous in that the resulting coating composition exhibits a small viscosity change and an aqueous coating composition capable of forming a coating film having a superior coating film appearance can be prepared therefrom.

One examples of a means for adjusting the glass transition temperature of the acrylic resin dispersion (A) to within the above range may be an example in which the core part preparation monomer (a-1) includes one or more of styrene, α-methylstyrene, o-methylstyrene, m-methylstyrene, p-methylstyrene, and p-tert-butylstyrene. The core part of the resulting acrylic resin dispersion has a styrene structure in this case, which is therefore advantageous in that the glass transition temperature of the acrylic resin dispersion (A) can be suitably adjusted.

The amount of the acrylic resin dispersion (A) contained in the aqueous coating composition is preferably 10 to 90 parts by mass, more preferably 15 to 80 parts by mass, and even more preferably 20 to 80 parts by mass, based on 100 parts by mass of the total resin solid content. The condition that the amount of the acrylic resin dispersion (A) is in the above range is advantageous in that the viscosity change is small and good coating workability is exhibited.

### Melamine resin (B)

The aqueous coating composition contains a melamine resin (B). The melamine resin (B) is a component that functions as a curing agent in the aqueous coating composition. The melamine resin (B) has a structure in which groups R⁵ to R¹⁰ are bonded via three nitrogen atoms to a melamine nucleus (triazine nucleus) as represented by the following formula (1). The melamine resin is generally constituted by a polynuclear body in which a plurality of melamine nuclei are bonded to each other. On the other hand, the melamine resin may be a mononuclear body composed of one melamine nucleus. The structure of the melamine nucleus constituting the melamine resin can be represented by the following formula (1).

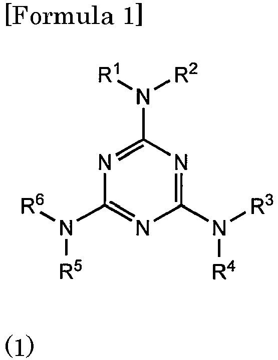

In the above formula (1), R¹ to R⁶ may be the same or different and each represent a hydrogen atom (imino group), CH₂OH (methylol group), CH₂OR⁷, or a binding part to another melamine nucleus. R⁷ is an alkyl group, preferably an alkyl group having 1 to 4 carbon atoms such as a methyl group, an ethyl group, a propyl group, and a butyl group.

Melamine resins can generally be broadly classified into water-soluble melamine resin and hydrophobic melamine resin. Here, the water-soluble melamine resin satisfies all of the following conditions (i) to (iii).
(i) The melamine resin has a number-average molecular weight of 1,000 or less.
(ii) In the above formula (1), at least one of R¹ to R⁶ is a hydrogen atom (imino group) or CH₂OH (methylol group). That is, the total amount of the average imino group content and the average methylol group content is 1.0 or more.
(iii) When R¹ to R⁶ are each CH₂OR⁷ in R¹ to R⁶ in the above formula (1), R⁷ is a methyl group.

The number-average molecular weight of the melamine resin is a value measured by GPC.

The hydrophobic melamine resin is a melamine resin other than the water-soluble melamine resin. That is, one that satisfies any of the following conditions (iv) to (vi) corresponds to the hydrophobic melamine resin.
(iv) The number-average molecular weight of the melamine resin is greater than 1,000.
(v) The total amount of the average imino group content and the average methylol group content is 1.0 or less.
(vi) In R¹ to R⁶ in the above formula (1), two or more of R¹ to R⁶ are CH₂OR⁷ and R⁷ is an alkyl group having 1 to 4 carbon atoms, provided that at least one R⁷ constituting R¹ to R⁶ is an alkyl group having 2 to 4 carbon atoms.

The melamine resin (B) preferably includes a hydrophobic melamine resin, and the melamine resin (B) is more preferably a hydrophobic melamine resin. There is an advantage that the use of a hydrophobic melamine resin can effectively prevent the generation of a mix of layers during wet-on-wet application.

Commercially available products may be used as the melamine resin (B). Specific examples of the commercially available products include CYMEL Series (trade name) manufactured by Allnex, specifically, CYMEL 202, CYMEL 204, CYMEL 211, CYMEL 232, CYMEL 235, CYMEL 236, CYMEL 238, CYMEL 250, CYMEL 251, CYMEL 254, CYMEL 266, CYMEL 267, CYMEL 285 (these are melamine resins having both a methoxy group and a butoxy group);
MYCOAT 506 (manufactured by Mitsui Cytec Ltd., a melamine resin having a butoxy group alone); and U-VAN 20N60 and U-VAN 20SE (U-VAN (trade name) Series manufactured by Mitsui Chemicals, Inc.).

These may be used singly, or two or more of them may be used in combination. Of these, CYMEL 202, CYMEL 204, CYMEL 211, CYMEL 250, CYMEL 254, and MYCOAT 212 are more preferable.

The amount of the melamine resin (B) contained in the aqueous coating composition is preferably 10 to 60 parts by mass, and more preferably 20 to 50 parts by mass, based on 100 parts by mass of the total resin solid content. The condition that the amount of the melamine resin (B) is in the above range is advantageous in that a good curing performance of the aqueous coating composition can be secured.

### Other resin components

The aqueous coating composition may contain other resin components, as necessary. Examples of such other resin components include a polyester resin dispersion and a polyurethane resin dispersion.

As the polyester resin dispersion, for example, a dispersion of a polyester resin having two or more hydroxyl groups in one molecule, which is called a polyester polyol, can be suitably used. The condition that the aqueous coating composition comprises the polyester resin dispersion is advantageous in that the coating workability is improved and the appearance of a resulting coating film is improved. Such a polyester resin is prepared by making a polyhydric alcohol and a polybasic acid or an anhydride thereof undergo polycondensation (an esterification reaction), and a polyester resin dispersion can be prepared by mixing and stirring the resulting polyester resin with a basic compound and an aqueous medium.

Examples of a polyhydric alcohol that can be used in the preparation of the polyester resin include ethylene glycol, diethylene glycol, polyethylene glycol, propylene glycol, dipropylene glycol, polypropylene glycol, neopentyl glycol, 1,2-butanediol, 1,3-butanediol, 2,3-butanediol, 1,4-butanediol, 1,5-pentanediol, 1,6-hexanediol, hydrogenated bisphenol A, hydroxyalkylated bisphenol A, 1,4-cyclohexanedimethanol, 2,2-dimethyl-3-hydroxypropyl-2,2-dimethyl-3-hydroxypropionate, 2,2,4-trimethyl-1,3-pentanediol, N,N-bis-(2-hydroxyethyl)dimethylhydantoin, polytetramethylene ether glycol, polycaprolactone polyol, glycerin, sorbitol, trimethylolethane, trimethylolpropane, trimethylolbutane, hexanetriol, pentaerythritol, dipentaerythritol, and tris-(hydroxyethyl) isocyanate. These polyhydric alcohols may be used singly, or two or more of them may be used in combination.

Examples of a polybasic acid or an anhydride thereof include phthalic acid, phthalic anhydride, tetrahydrophthalic acid, tetrahydrophthalic anhydride, hexahydrophthalic acid, hexahydrophthalic anhydride, methyltetrahydrophthalic acid, methyltetrahydrophthalic anhydride, himic anhydride, trimellitic acid, trimellitic anhydride, pyromellitic acid, pyromellitic anhydride, isophthalic acid, terephthalic acid, maleic acid, maleic anhydride, fumaric acid, itaconic acid, adipic acid, azelaic acid, sebacic acid, succinic acid, succinic anhydride, lactic acid, dodecenylsuccinic acid, dodecenylsuccinic anhydride, cyclohexane-1,4-dicarboxylic acid, and carbic anhydride. These polybasic acids or anhydrides thereof may be used singly, or two or more of them may be used in combination.

As the polyester resin dispersion, a dispersion of a polyester resin modified with a lactone, an oil or fat, a fatty acid, melamine resin, urethane resin, or the like can also be used. For example, the dispersion of a polyester resin modified with an oil or fat or a fatty acid is a polyester resin modified using an oil or fat such as castor oil, dehydrated castor oil, coconut oil, corn oil, cottonseed oil, linseed oil, perilla oil, poppy oil, safflower oil, soybean oil, and tung oil, or a fatty acid extracted from these oils and fats. In the production of the fat, oil or fatty acid-modified polyester resin, it is preferable to add the above-mentioned fat or oil and/or fatty acid in an amount up to about 30 parts in total by mass based on 100 parts by mass of the polyester resin.

The polyester resin dispersion preferably has a number-average molecular weight of 800 to 10,000, and more preferably 1,000 to 8,000 in terms of polystyrene determined by GPC measurement.

The polyester resin dispersion preferably has a solid hydroxyl value of 20 to 350 mg KOH/g, more preferably 30 to 300 mg KOH/g, and even more preferably 40 to 200 mg KOH/g.

When the aqueous coating composition comprises a polyester resin dispersion, the content of the polyester resin dispersion is preferably in the range of 5 to 60 parts by mass, and more preferably in the range of 5 to 50 parts by mass, based on 100 parts by mass of the total resin solid content.

The polyurethane resin dispersion can be prepared by dispersing, in water, a polyurethane resin prepared by using a polyol compound, a compound having an active hydrogen group and a hydrophilic group in its molecule, an organic polyisocyanate, and, if necessary, a chain extender and a polymerization terminator.

The polyol compound is not particularly limited as long as it is a compound having two or more hydroxyl groups, and examples thereof include polyhydric alcohols such as ethylene glycol, propylene glycol, 1,4-butanediol, 1,6-hexanediol, trimethylolpropane, and glycerol; polyether polyols such as polyethylene glycol, polypropylene glycol, and polytetramethylene ether glycol; polyester polyols obtained from a dicarboxylic acid such as adipic acid, sebacic acid, itaconic acid, maleic anhydride, phthalic acid, and isophthalic acid, and a glycol such as ethylene glycol, triethylene glycol, propylene glycol, butylene glycol, tripropylene glycol, and neopentyl glycol; polycaprolactone polyol; polybutadiene polyol; polycarbonate polyol; and polythioether polyol. The polyol compound may be used singly, or two or more thereof may be used in combination.

Examples of the compound having an active hydrogen group and a hydrophilic group in the molecule include compounds known as compounds containing active hydrogen and an anionic group {an anionic group or an anion-forming group (a group that reacts with a base to form an anionic group and, in this case, that is converted into an anionic group by neutralizing with a base before, during or after a urethanization reaction)} (those disclosed in JP-B-42-24192 and JP-B-55-41607; specific examples include dimethylolalkanoic acids such as α,α-dimethylolpropionic acid and α,α-dimethylolbutyric acid), compounds known as compounds having active hydrogen and a cationic group in the molecule (e.g., those disclosed in JP-B-43-9076), and compounds known as compounds having active hydrogen and a nonionic group (e.g., those disclosed in JP-B-48-41718; specifically, polyethylene glycol and alkylalcohol alkylene oxide adducts, etc.).

The organic polyisocyanate is not particularly limited as long as it has two or more isocyanate groups in its molecule, and examples thereof include aliphatic diisocyanates such as 1,4-tetramethylene diisocyanate, 1,6-hexamethylene diisocyanate, 2,2,4-trimethylhexamethylene diisocyanate, 3-isocyanatomethyl-3,5,5-trimethylcyclohexyl isocyanate, dicyclohexylmethane-4,4'-diisocyanate, methylcyclohexyl-2,4-diisocyanate, methylcyclohexyl-2,6-diisocyanate, xylylene diisocyanate, 1,3-bis(isocyanate) methylcyclohexane, tetramethylxylylene diisocyanate, transcyclohexane-1,4-diisocyanate, and lysine diisocyanate; aromatic diisocyanates such as 2,4-toluylene diisocyanate, 2,6-toluylene diisocyanate, diphenylmethane-4,4'-diisocyanate, 1,5'-naphthene diisocyanate, tolidine diisocyanate, diphenylmethylmethane diisocyanate, tetraalkyldiphenylmethane diisocyanate, 4,4'-dibenzyldiisocyanate, and 1,3-phenylene diisocyanate; and triisocyanates such as lysine ester triisocyanate, triphenylmethane triisocyanate, 1,6,11-undecane triisocyanate, 1,8-diisocyanato-4,4-isocyanatomethyloctane, 1,3,6-hexamethylene triisocyanate, and bicycloheptane triisocyanate. These polyisocyanate compounds may be used in the form of a dimer or trimer thereof (isocyanurate linkage), and may be reacted with an amine and used as a biuret. Moreover, it is also possible to use polyisocyanates having a urethane linkage resulting from reacting such polyisocyanate compounds with polyols.

The chain extender that may be added if necessary in the preparation of the polyurethane resin dispersion is not particularly limited as long as it contains two or more active hydrogen groups, and examples thereof include low molecular weight polyols (e.g., ethylene glycol, propylene glycol, 1,4-butanediol, 3-methylpentanediol, 2-ethyl-1,3-hexanediol, and trimethylolpropane), polyamines (e.g., ethylenediamine, hexamethylenediamine, diethylenetriamine, hydrazine, xylylenediamine, and isophoronediamine), and water.

Examples of the polymerization terminator include a compound having one active hydrogen in its molecule (for example, monoalcohol and monoamine) or a monoisocyanate compound.

The reaction method of the polyurethane resin may be any method of a one-shot method in which the respective components are reacted at once and a multistage method in which the respective components are reacted in steps {a method of producing the resin by reacting part of an active hydrogen-containing compound (e.g., macromolecular polyol) with a polyisocyanate, thereby forming an NCO terminated prepolymer, and then reacting the remainder of the active hydrogen-containing compound}. The reaction of synthesizing the polyurethane resin is performed usually at 40 to 140°C, and preferably 60 to 120°C. In order to accelerate the reaction, there may be used a catalyst that is usually used for a urethanization reaction, such as a tin-based catalyst including dibutyltin laurate and tin octylate or an amine-based catalyst including triethylenediamine. In addition, the above reaction may be carried out in an organic solvent that is inert to isocyanate (e.g., acetone, toluene, dimethylformamide, etc.), and the solvent may be added either during the reaction or after the reaction.

The polyurethane resin dispersion can be prepared by treating a resulting polymer with a known method (a method of forming an anionic group by neutralization with a base in the case of an anion-forming group, a method of forming a cationic group with a quaternarizing agent or a method of forming a cationic group by neutralization with an acid in the case of a cation-forming group) and then dispersing the polymer in water.

When the aqueous coating composition comprises a polyurethane resin dispersion, the content of the polyurethane resin dispersion is preferably in the range of 5 to 60 parts by mass, and more preferably in the range of 5 to 50 parts by mass, based on 100 parts by mass of the total resin solid content.

### Other components

The aqueous coating composition of the present invention may comprise other components as necessary in addition to the above-described components. Examples of such other components include pigments, film-forming assistants, surface conditioners, antiseptic agents, fungicides, defoaming agents, light stabilizers, ultraviolet absorbers, antioxidants, and pH adjusters.

The pigment is not particularly limited, and examples thereof include: organic coloring pigments such as azo chelate pigments, insoluble azo pigments, condensed azo pigments, monoazo pigments, disazo pigments, diketopyrrolopyrrole pigments, benzimidazolone pigments, phthalocyanine pigments, indigo pigments, thioindigo pigments, perinone pigments, perylene pigments, dioxane pigments, quinacridone pigments, isoindolinone pigments, naphthol pigments, pyrazolone pigments, anthraquinone pigments, anthrapyrimidine pigments, and metal complex pigments; inorganic coloring pigments such as chrome yellow, yellow iron oxide, chromium oxide, molybdate orange, red iron oxide, titanium yellow, zinc flower, carbon black, titanium dioxide, cobalt green, phthalocyanine green, ultramarine, cobalt blue, phthalocyanine blue, and cobalt violet; mica pigments (titanium dioxide-coated mica, colored mica, metal-plated mica); graphite pigment, alumina flake pigment, metal titanium flakes, stainless flakes, plate-like iron oxide, phthalocyanine flakes, metal-plated glass flakes, other colored and colored flat pigments; and extender pigments such as titanium oxide, calcium carbonate, barium sulfate, barium carbonate, magnesium silicate, clay, talc, silica, and calcined kaolin.

### Preparation of aqueous coating composition

The method for preparing the aqueous coating composition is not particularly limited, and the aqueous coating composition can be prepared by stirring the above-described components with a stirrer or the like. When a pigment, etc. are contained in the aqueous coating composition, those having good dispersibility can be mixed with a stirrer, and as another method, those previously dispersed in a vehicle containing water, a surfactant, a dispersant, etc. with a sand grind mill or the like can be added.

The aqueous coating composition is not particularly limited in its application method and drying conditions, and those which are commonly well-known can be applied. The aqueous coating composition can be used for various uses, and it exhibits superior performance especially under normal temperature drying to forced drying conditions. The forced drying generally means heating at about 80°C, but may be heating up to about 150°C, for example.

The object to which the aqueous coating composition of the present invention is applied is not particularly limited, and examples thereof include metal substrates such as iron, stainless steel and the like and surface-treated products thereof, cement substrates such as gypsum, and plastic substrates such as polyesters and acrylic plastics. Further examples include various objects for construction such as building materials and structures, various objects for the automobile industry such as automobile bodies and parts, and various objects for industrial fields such as electric appliances and electronic parts.

The aqueous coating composition is preferably in an embodiment where as to the viscosity of a dry coating film of the coating composition, the viscosity η1 in which the solid content in a dry coating film is 60% by mass and the viscosity η2 in which the solid content in a dried coating film is 90% by mass satisfy the following condition: $1 \leq η 2 / η 1 \leq 10 .$

The viscosities η1 and η2 are shear viscosities measured at a temperature of 23°C, at a shear rate of 0.1 s⁻¹ using a rotary viscoelasticity analyzer.

The method of measuring the viscosity by increasing the solid content of an uncured coating material may, for example, be the following method. A coated sheet with an uncured coating film formed thereon is adjusted to have solid contents of 60 ± 3% and 90 ± 3% using, for example, a vacuum desolvation apparatus and the viscosity is measured at a temperature of 23°C and a shear rate of 0.1 s⁻¹ using a rotary viscoelasticity analyzer.

In the present description, for example, "the solid content in a dry coating film is 60% by mass" means that a state where the solid content is 60 ± 3% by mass, and for example, "the solid content in a dry coating film is 90% by mass" means that a state where the solid content is 90 ± 3% by mass.

In the present description, "a dry coating film of a coating composition" means a state where at least a part of the solvent contained in the coating composition has been evaporated after the coating composition has been applied to an object to be coated.

The condition that the viscosities η1 and η2 of an aqueous coating composition satisfy the above-defined condition means that a small viscosity change is exhibited even when the amount of the solid content in a dry coating film is in the above range and the amount of the solvent contained in the coating composition is reduced. The condition that a small viscosity change is exhibited even when the amount of the solvent is reduced is advantageous in that the change in coating workability exhibited when the viscosity has changed can be reduced. Such an aqueous coating composition has an advantage that it can exhibit good coating workability even under various coating environments differing in temperature and/or humidity.

### Formation of multilayer coating film

The aqueous coating composition can be suitably used, for example, in forming a multilayer coating film. The method of forming a multilayer coating film may be, for example, the following method.

A method for forming a multilayer coating film, comprising a step (1) of applying a first aqueous base coating composition onto a surface of an object to form an uncured first aqueous base coating film, a step (2) of applying a second aqueous base coating composition onto the uncured first aqueous base coating film to form an uncured second aqueous base coating film, a step (3) of applying a clear coating composition onto the uncured second aqueous base coating film to form an uncured clear coating film, and a step (4) of heat-curing the uncured first aqueous base coating film, the uncured second aqueous base coating film, and the uncured clear coating film obtained in the steps (1) to (3) at a time to form a multilayer coating film.

The method of forming a multilayer coating film is a method in which application is performed sequentially when a coating film is in an uncured state, and this is a so-called wet-on-wet application method. Wet-on-wet application is advantageous in terms of economy and environmental impact because it can omit a baking drying oven.

In the above forming method, the aqueous coating composition can be suitably used as the first aqueous base coating composition.

The first aqueous base coating composition can be applied by application methods commonly used in the coating field. Examples of such application methods include multistage application, preferably two-stage application, with use of air electrostatic spray application, or application combining air electrostatic spray application and a rotary atomization type electrostatic applicator. The thickness of the first aqueous base coating film is preferably in the range of 3 to 40 µm.

Drying or preheating may, if necessary, be carried out after applying the first aqueous base coating composition and before applying the second aqueous base coating composition.

In another embodiment, after the application of the first aqueous base coating composition, the resulting coating film may be heat cured and then followed by the application of the second aqueous base coating composition onto the cured first aqueous base coating film.

### Second aqueous base coating composition

As the second aqueous base coating composition, for example, an aqueous base coating composition usually used for the coating of automobile bodies can be used. Examples of such a second aqueous base coating composition include one containing a coating film-forming resin, a curing agent, a pigment such as a glitter pigment, a coloring pigment, and an extender pigment, and additives which are solved or dispersed in an aqueous medium. The second aqueous base coating material is not particularly limited with respect to its form as long as it is aqueous and, for example, it may be in the form of a water-soluble form, a water-dispersion form, an emulsion form, or the like.

The second aqueous base coating material may be applied by the same method as that of the first aqueous base coating material. The thickness of the second aqueous base coating film is preferably in the range of 3 to 20 µm. Drying or preheating may, if necessary, be carried out after applying the second aqueous base coating composition and before applying the clear coating composition.

In another embodiment, after the application of the second aqueous base coating composition, the resulting coating film may be heat cured and then followed by the application of a clear coating composition onto the cured second aqueous base coating film.

### Clear coating composition

As the clear coating composition, for example, a composition that is usually used as a clear coating composition for an automobile body can be used. Examples of such a clear coating composition include a composition comprising a coating film-forming resin and, if necessary, a curing agent and other additives with them being dispersed or dissolved in a medium. Examples of the coating film-forming resin include an acrylic resin, a polyester resin, an epoxy resin, and an urethane resin. These can be used in combination with a curing agent such as an amino resin and/or an isocyanate resin. From the viewpoints of transparency or acid-resistant etching property, it is preferable to use a combination of an acrylic resin and/or a polyester resin and an amino resin, or an acrylic resin and/or a polyester resin having a carboxylic acid/epoxy curing system.

The application of the clear coating composition can be carried out using an application method known to those skilled in the art according to the mode of application of the clear coating composition. In general, the dry film thickness of a clear coating film to be formed by applying the above-described clear coating composition is preferably 10 to 80 pm, and more preferably 20 to 60 µm.

By heat curing an uncured clear coating film resulting from the application of a clear coating composition, a cured clear coating film can be formed. When the clear coating composition has been applied onto an uncured second aqueous base coating film, the uncured coating film is to be heat cured by heating. The heat curing temperature is preferably set to 80 to 180°C, and more preferably 120 to 160°C, from the viewpoint of curability and physical properties of a resulting multilayer coating film. The heat curing time may be set arbitrarily according to the above-mentioned temperature. Examples of the heat curing conditions include conditions where heating is performed at a heat curing temperature of 120°C to 160°C for 10 minutes to 30 minutes.

### EXAMPLES

The present invention will be described hereafter in more detail by way of examples, to which the present invention is not intended to be limited. In the following examples, all designations of "part(s)" and "%" are on a mass basis, unless otherwise stated.

### Production Example 1 Production of acrylic resin dispersion (1)

### Preparation step 1

A reactor equipped with a stirring device, a cooling device, and a heating device was charged with 210 parts by mass of butyl acetate and heated to 120°C. Thereafter, a monomer mixture composed of 73.65 parts by mass of styrene (ST), 178.96 parts by mass of methyl methacrylate (MMA), 75.94 parts by mass of n-butyl acrylate (BA), 64.45 parts by mass of 2-ethylhexyl acrylate, 105.00 parts by mass of hydroxyethyl methacrylate (HEMA), and 2.0 parts by mass of acrylic acid (AA) and a solution prepared by dissolving 70 parts by mass of tert-butyl peroxy-2-ethylhexanoate in 45 parts by mass of butyl acetate were dropped from two lines at constant rates over 90 minutes. While maintaining the reaction vessel at 120°C, 10 parts by mass of methacrylic anhydride was added and kept for 2 hours. Thereafter, the mixture was cooled to 60°C to obtain a core polymer (core part).

### Preparation step 2

Subsequently, 210 parts by mass of butyl acetate was charged into a reactor equipped with a cooling device and a heating device and heated to 120°C. Thereafter, a monomer mixture composed of 835.00 parts by mass of the core polymer obtained in the step 1, 73.65 parts by mass of styrene (ST), 178.96 parts by mass of methyl methacrylate (MMA), 75.94 parts by mass of n-butyl acrylate (BA), 64.45 parts by mass of 2-ethylhexyl acrylate (2-EHA), 105.00 parts by mass of hydroxyethyl methacrylate (HEMA), and 20.0 parts by mass of acrylic acid (AA) and a solution prepared by dissolving 140 parts by mass of tert-butyl peroxy-2-ethylhexanoate in 120 parts by mass of butyl acetate were dropped from two lines at constant rates over 90 minutes.

### Preparation step 3

The reaction mixture was kept at 120°C for 30 minutes, and a solution prepared by dissolving 3 parts by mass of tert-butyl peroxy-2-ethylhexanoate in 80 parts by mass of butyl acetate was dropped from a single line at a constant rate over 30 minutes. After stirring at 120°C for 60 minutes, the mixture was cooled to 70°C to synthesize a core-shell polymer. The resulting core-shell polymer had a resin solid content of 58.5% by mass, and a weight-average molecular weight of 25,000. The composition, the weight-average molecular weight, the acid value determined by calculation, and the hydroxyl value of the core-shell polymer are shown in Table 1.

### Preparation step 4

Subsequently, 170 parts by mass of dipropylene glycol monomethyl ether was added for dilution. Until the solid content reached 85% by mass, butyl acetate was distilled off from the resulting core-shell polymer under reduced pressure. After adding 27.21 parts by mass of dimethylethanolamine (DMEA) thereto, 1680 parts by mass of water was added to prepare acrylic resin dispersion (1). The resin solid content of the resulting acrylic resin dispersion (1) was 36.5% by mass.

The special values determined from the resin solid content and the composition of the resulting dispersion are shown in the following table.

The average particle diameter is a volume-average particle diameter D50, which is a value measured with a dispersion diluted with ion-exchanged water such that an appropriate signal level is attained using a laser Doppler type particle size analyzer ("Microtrac UPA150" manufactured by Nikkiso Co., Ltd.). The weight-average molecular weight is a value obtained by converting a value measured by gel permeation chromatography (GPC) in terms of polystyrene standards.

### Production Examples 2 to 11 (6 to 11 are comparative production examples) Production of acrylic resin dispersions (A)(2) to (11)

Acrylic resin dispersions (A)(2) to (11) were produced in the same manner as in Example 1, except that the charged amounts of the respective raw materials were changed to the values shown in Table 1.

### Production Example 12 (Comparative Production Example) Production of single-layer acrylic resin dispersion (12)

A reactor equipped with a cooling device and a heating device was charged with 466 parts by mass of butyl acetate and heated to 120°C. Thereafter, a monomer mixture composed of 50.00 parts by mass of styrene (ST), 298.61 parts by mass of methyl methacrylate (MMA), 225.01 parts by mass of n-butyl acrylate (BA), 155.86 parts by mass of 2-ethylhexyl acrylate (2-EHA), 231.98 parts by mass of hydroxyethyl methacrylate (HEMA), and 38.53 parts by mass of acrylic acid (AA) and a solution prepared by dissolving 15 parts by mass of tert-butyl peroxy-2-ethylhexanoate in 120 parts by mass of butyl acetate were dropped from two lines at constant rates over 90 minutes.

The reaction mixture was kept at 120°C for 30 minutes, and a solution prepared by dissolving 3 parts by mass of tert-butyl peroxy-2-ethylhexanoate in 80 parts by mass of butyl acetate was dropped from a single line at a constant rate over 30 minutes. After stirring at 120°C for 60 minutes, the mixture was cooled to 70°C to synthesize acrylic polyol. The resulting acrylic polyol had a resin solid content of 60% by mass and a weight-average molecular weight of 24,000. The composition, the weight-average molecular weight, the acid value determined by calculation, and the hydroxyl value of the acrylic polyol are shown in Table 1.

Subsequently, 175 parts by mass of dipropylene glycol monomethyl ether was added for dilution. Until the solid content reached 85% by mass, butyl acetate was distilled off from the resulting acrylic polyol under reduced pressure. After adding 47.67 parts by mass of dimethylethanolamine) thereto, 2700 parts by mass of water was added to prepare acrylic resin dispersion (12). The resin solid content of the resulting aqueous dispersion was 30.0% by mass. The special values determined from the resin solid content and the composition of the resulting acrylic resin dispersion are shown in the following table.

### Production Example 13 (Comparative Production Example) Production of acrylic resin emulsion

Deionized water (633 parts) was added to a reaction vessel, and the temperature was raised to 80°C while mixing and stirring in a nitrogen stream. Subsequently, a first-stage monomer mixture composed of 75.65 parts by mass of styrene (ST), 178.96 parts by mass of methyl methacrylate (MMA), 75.94 parts by mass of n-butyl acrylate (BA), 64.45 parts by mass of 2-ethylhexyl acrylate (2-EHA), and 105.00 parts by mass of hydroxyethyl methacrylate (HEMA), a monomer emulsion composed of 25.00 parts of Aqualon HS-10 (polyoxyethylene alkylpropenylphenyl ether sulfate, produced by DKS Co. Ltd.), 25.00 parts of ADEKA REASOAP NE-20 (α-[1-[(allyloxy)methyl]-2-(nonylphenoxy)ethyl]-ω-hydroxyoxyethylene, produced by ADEKA Corp.), and 400 parts of deionized water, and an initiator solution composed of 1.2 parts of ammonium persulfate and 500 parts of deionized water were dropped in parallel into the reaction vessel over 1.5 hours. After the completion of the dropping, aging was carried out at that temperature for 1 hour.

Furthermore, at 80°C, a second-stage monomer mixture of 53.65 parts by mass of styrene (ST), 178.96 parts by mass of methyl methacrylate (MMA), 75.94 parts by mass of n-butyl acrylate (BA), 64.45 parts by mass of 2-ethylhexyl acrylate (2-EHA), 105.00 parts by mass of hydroxyethyl methacrylate (HEMA), and 22 parts by mass of acrylic acid, a monomer emulsion composed of 10 parts of Aqualon HS-10 and 250 parts of deionized water, and an initiator solution composed of 3.0 parts of ammonium persulfate and 500 parts of deionized water were dropped in parallel into the reaction vessel over 1.5 hours. After the completion of the dropping, aging was carried out at that temperature for 2 hours.

Subsequently, the mixture was cooled to 40°C and filtered through a 400 mesh filter, and then 100 parts of deionized water and 1.6 parts of dimethylaminoethanol were added to adjust to pH 6.5, and thus an acrylic resin emulsion having an average particle diameter of 150 nm, a nonvolatile content of 35%, a solid acid value of 20 mg KOH/g, and a hydroxyl value of 100 mg KOH/g was obtained.

### Production Example 14 (Comparative Production Example) Production of water-soluble acrylic resin

Tripropylene glycol methyl ether (23.89 parts) and 161.1 parts of propylene glycol methyl ether were added to a reaction vessel, and the temperature was raised to 120°C while mixing and stirring in a nitrogen stream. Subsequently, a monomer mixture composed of 100.00 parts by mass of styrene (ST), 198.92 parts by mass of methyl methacrylate (MMA), 391.48 parts of butyl acrylate (BA), 13.40 parts of 2-ethylhexyl acrylate (EHA), 231.98 parts of 2-hydroxyethyl methacrylate, and 64.22 parts of acrylic acid was prepared, and the monomer mixture and an initiator solution composed of 100 parts of tripropylene glycol methyl ether and 20 parts of tert-butyl peroxy-2-ethylhexanoate (hexanate 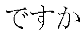 ? hexanoate 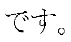 ) were dropped in parallel into the reaction vessel over 3 hours. After the completion of the dropping, aging was carried out at that temperature for 0.5 hours.

Furthermore, an initiator solution composed of 50 parts of tripropylene glycol methyl ether and 3 parts of tert-butyl peroxy-2-ethylhexanoate (hexanate 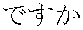 ? hexanoate 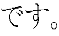 ) was dropped into the reaction vessel over 0.5 hours. After the completion of the dropping, aging was carried out at that temperature for 2 hours.

After removing the solvent to a solid content of 85% with a desolvation apparatus, 2070 parts of deionized water and 79.4 parts of dimethylaminoethanol were added to obtain a water-soluble acrylic resin solution. The water-soluble acrylic resin solution obtained had a nonvolatile content of 30%, a solid acid value of 50 mg KOH/g, and a hydroxyl value of 100 mg KOH/g.

### Production Example 15 Production of polyester resin dispersion

A normal reaction vessel for polyester resin production equipped with a stirrer, a thermometer, a reflux condenser, a nitrogen inlet tube, etc. was charged with 19 parts of isophthalic acid, 36 parts of hexahydrophthalic anhydride, 7 parts of trimethylolpropane, 12 parts of neopentyl glycol, 26 parts of 1,6-hexanediol, and 0.1 parts of dibutyltin oxide as a catalyst, and the temperature of the mixture was raised from 150°C to 230°C over 3 hours and maintained at 230°C for about 5 hours. After cooling to 135°C, 7.7 parts of trimellitic anhydride was added and stirred for 1 hour to obtain a polyester resin having a solid acid value of 50 mg KOH/g, a solid hydroxyl value of 45 mg KOH/g, and a number-average molecular weight of 2500. After cooling to 90°C, 7.3 parts of dimethylethanolamine and 225 parts of ion-exchanged water were added to obtain a polyester resin dispersion having a solid content of 30%.

### Production Example 16 Production of polyurethane resin dispersion

In a 1-L flask equipped with a stirrer, a nitrogen inlet tube, a temperature controller, a condenser, and a dropping funnel, 40.2 parts by weight of dimethylolpropionic acid, 30 parts by weight of triethylamine, and 312 parts by weight of N-methylpyrrolidone were heated and melted at 90°C. Subsequently, 290 parts by weight of isophorone diisocyanate and propylene glycol methyl ether were added to a reaction vessel, and the temperature was raised to 120°C while mixing and stirring in a nitrogen stream. Subsequently, a monomer mixture composed of 100.00 parts by mass of styrene (ST), 198.92 parts by mass of methyl methacrylate (MMA), 391.48 parts of butyl acrylate (BA), 13.40 parts of 2-ethylhexyl acrylate (EHA), 231.98 parts of 2-hydroxyethyl methacrylate, and 64.22 parts of acrylic acid was prepared, and the monomer mixture and an initiator solution composed of 100 parts of tripropylene glycol methyl ether and 20 parts of tert-butyl peroxy-2-ethylhexanoate were dropped in parallel into the reaction vessel over 3 hours. After the completion of the dropping, aging was carried out at that temperature for 0.5 hours.

Furthermore, an initiator solution composed of 50 parts of tripropylene glycol methyl ether and 3 parts of tert-butyl peroxy-2-ethylhexanoate was dropped into the reaction vessel over 0.5 hours. After the completion of the dropping, aging was carried out at that temperature for 2 hours.

After removing the solvent to a solid content of 85% with a desolvation apparatus, 2070 parts of deionized water and 79.4 parts of dimethylaminoethanol were added to obtain a water-soluble acrylic resin solution. The water-soluble acrylic resin solution obtained had a nonvolatile content of 30%, a solid acid value of 50 mg KOH/g, and a hydroxyl value of 100 mg KOH/g.

### Production Example 15 Production of polyester resin dispersion

Production Example 17, 166.2 parts of the acrylic resin dispersion (1) obtained in Production Example 1, 33.3 parts of the polyester resin dispersion obtained in Production Example 15, 30.3 parts of the polyurethane resin dispersion obtained in Example 16, and 28.6 parts of melamine resin (1) (CYMEL 250, melamine resin manufactured by Allnex, nonvolatile content: 70%) as a curing agent, 1 part of ADEKA NOL UH814 (trade name; urethane-associated thickener manufactured by ADEKA Corporation) as a viscosity-adjusting agent, 5 parts of ethylene glycol mono-2-ethylhexyl ether, and 5 parts of 2-ethylhexanol as hydrophilic organic solvents were mixed and stirred, and thus aqueous coating composition (1) was obtained.

### Examples 2 to 15 and Comparative Examples 1 to 18

Aqueous coating compositions (2) to (33) were prepared in the same procedures as in Example 1, except that the acrylic resin dispersion, the polyester resin dispersion, the polyurethane resin dispersion, and the curing agent (melamine resin) were compounded in the amounts shown in the following tables.

The following evaluation tests were carried out using the aqueous coating compositions (1) to (33) obtained in the above Examples and Comparative Examples. The results obtained are shown in the following tables.

### Method of measuring viscosity of coating film

The viscosity of a coating film was measured in accordance with the following procedure.

The aqueous coating compositions prepared in Examples and Comparative Examples were dried to each have solid contents of 60 ± 3% and 90 ± 3% by using a vacuum desolvation apparatus (ARV-310) manufactured by THINKY Corporation. Subsequently, viscosity was measured at a temperature of 23°C and a shear rate of 0.1 s⁻¹ using a viscometer (MCR-301) manufactured by Anton Paar GmbH.

As a parameter indicating a rate of viscosity change, η2/η1 was evaluated where the viscosity at which the solid content in a dry coating film is 60 ± 3% by mass is represented by η1 and the viscosity at which the solid content in the dry coating film is 90 ± 3% by mass is represented by η2. Evaluation criteria were as follows.

### Evaluation criteria for viscosity (n2/n 1)

⊚: 1 ≤ η2/η1 ≤ 5 (There is almost no difference in viscosity between the solid contents of 60% by mass and 90% by mass.)
o: 5 < η2/η1 ≤ 10 (There is a slight difference in viscosity between the solid contents of 60% by mass and 90% by mass.)
△: 10 < η2/η1 ≤ 15 (There is a viscosity difference between the solid contents of 60% by mass and 90% by mass.)
×: 15 < η2/η1 (There is a very large difference in viscosity between the solid contents of 60% by mass and 90% by mass.)

### Evaluation of coating film appearance

### Formation of multilayer coating film

Dull steel sheet treated with zinc phosphate was electrodeposited with POWERNIX 150 (trade name, cationic electro-deposition coating manufactured by Nippon Paint Co., Ltd.) such that the dry coating film was 20 µm thick, heat cured at 160°C for 30 minutes, and then cooled, and thus a cured electrodeposition coating film was formed.

On the resulting electrodeposition coating film, any one of the aqueous coating compositions (1) to (33) was applied with a rotary atomization type electrostatic applicator such that the dry film thickness was 20 µm thick, and subsequently, AQUAREX AR-2100NH-700 (trade name, aqueous metallic base coating material manufactured by Nippon Paint Co., Ltd.) as a second aqueous base coating composition was applied with a rotary atomization type electrostatic applicator such that the dry film thickness was 10 µm in thickness, followed by preheating at 80°C for 3 minutes.

The aqueous coating composition was applied under two different conditions, namely, through the step of applying it under the wet condition defined by a temperature of 15°C and a humidity of 80% and then applying the second base coating composition under the condition of 23°C and 60%, and through the step of applying the aqueous coating composition under the dry condition defined by a temperature of 30°C and a humidity of 50% and then applying the second base coating composition under the condition of 23°C and 60%. The aqueous coating composition was applied after an interval of 6 minutes from the application of the second base coating composition.

Further, PU EXCEL O-2100 (trade name, two-component clear coating material manufactured by Nippon Paint Co., Ltd.) as a clear coating composition was applied to the coated sheet with a rotary atomization type electrostatic applicator such that the dry film thickness was 35 µm thick, followed by heat curing at 140°C for 30 minutes, and thus two types of multilayer coating film specimens differing in the application condition for the aqueous coating composition (1).

The aqueous coating compositions (1) to (33), the second aqueous base coating composition, and the clear coating material were diluted under the following conditions.

### • Aqueous coating compositions (1) to (33)

Diluent: ion-exchanged water
40 seconds/NO.4 Ford Cup/20°C

### • Second aqueous base coating composition

Diluent: ion-exchanged water
45 seconds/NO.4 Ford Cup/20°C

### • Clear coating composition

Diluent: mixed solvent of EEP (ethoxyethyl propionate)/S-150 (aromatic hydrocarbon solvent manufactured by Exxon) = 1/1 (mass ratio)
30 seconds/NO.4 Ford Cup/20°C

### Method and criteria for evaluation of coating film appearance

The finished appearance of the resulting multilayer coating films was evaluated by measuring SW (measurement wavelength: 300 to 1,200 µm) using a wave-scan DOI (manufactured by BYK-Gardner). The difference in appearance between the appearance SW (WET) of a coating film applied under wet conditions and the appearance SW (DRY) of a coating film applied under dry conditions was used as an evaluation criterion.

### Evaluation criteria for coating film appearance

⊚: SW (DRY) - SW (WET) ≤ 2 (There is almost no difference in appearance between the wet condition and the dry condition.)
o: 2 < SW (DRY) - SW (WET) ≤ 5 (There is a slight difference in appearance between the wet condition and the dry condition, but there is no problem.)
△: 5 < SW (DRY) - SW (WET) ≤ 10 (There is a large difference in appearance between the wet condition and the dry condition.)
×: 10 < SW (DRY) - SW (WET) (There is a very large difference in appearance between the wet condition and the dry condition.)

### Evaluation of layer miscibility (flip-flop property)

The layer miscibility of the multilayer coating films prepared under the wet condition was evaluated using a flip-flop property. In a multilayer coating film good in layer miscibility, the orientation of the aluminum flakes contained in the second base coating is orderly arranged on the aqueous coating composition applied on a substrate, and the film is strong in flip-flop property. In a multilayer coating film poor in layer miscibility, the orientation of the aluminum flakes contained in the second base coating is randomly arranged on the aqueous coating composition applied on a substrate, and the film lacks flip-flop property.

As to the flip-flop property, L values at 15° (front) and 110° (shade) were measured by using an X-Rite MA68II (manufactured by X-Rite Inc.). The larger the difference is, the better the flip-flop property is.

### Evaluation criteria for layer miscibility (flip-flop property)

⊚: 100 ≤ L value (15°) - L value (110°) (The L value difference between the front and the shade is large, and the flip-flop property is strong.)
o: 90 ≤ L value (15°) - L value (110°) < 100 (The L value between the front and the shade is slightly large, and the flip-flop property is slightly strong.)
△: 80 ≤ L value (15°) - L value (110°) < 90 (Mix of layers occurred, and the flip-flop property is weak.)
×: L value (15°) - L value (110°) < 80 (Mix of layers occurred violently, and the film lacks flip-flop property.)

**[Table 1]**

| | | Acrylic resin dispersion (A) | | | | | | |
|---|---|---|---|---|---|---|---|---|
| | | (1) | (2) | (3) | (4) | (5) | (6) | (7) |
| Overall | ST | 129.29 | 116.29 | 152.16 | 119.29 | 281.05 | 152.16 | 129.29 |
| | MMA | 357.92 | 357.92 | 139.64 | 289.92 | 332.67 | 139.64 | 357.92 |
| | nBA | 151.88 | 151.88 | 189.66 | 141.88 | 118.59 | 189.66 | 151.88 |
| | EHA | 128.91 | 128.91 | 264.54 | 126.91 | 10.00 | 264.54 | 128.91 |
| | HEMA | 210.00 | 210.00 | 232.00 | 300.00 | 232.00 | 232.00 | 210.00 |
| | AA | 22.00 | 35.00 | 22.00 | 22.00 | 25.69 | 22.00 | 22.00 |
| Core | ST | 73.65 | 73.65 | 87.08 | 90.91 | 92.03 | 139.33 | 75.65 |
| | MMA | 178.96 | 178.96 | 69.82 | 202.94 | 99.80 | 111.71 | 178.96 |
| | nBA | 75.94 | 75.94 | 94.83 | 99.31 | 35.58 | 151.73 | 65.94 |
| | EHA | 64.45 | 64.45 | 132.27 | 88.84 | 3.00 | 211.63 | 64.45 |
| | HEMA | 105.00 | 105.00 | 116.00 | 210.00 | 69.60 | 185.60 | 105.00 |
| | AA | 2.00 | 2.00 | 0.00 | 8.00 | 0.00 | 0.00 | 10.00 |
| | Methacrylic anhydride | 10 | 10 | 10 | 10 | 10 | 10 | 10 |
| | Amount of initiator | 70.0 | 70.0 | 50.0 | 70.0 | 100.0 | 70.0 | 70.0 |
| Shell | ST | 55.65 | 42.65 | 65.08 | 28.39 | 189.03 | 12.83 | 53.65 |
| | MMA | 178.96 | 178.96 | 69.82 | 86.98 | 232.87 | 27.93 | 178.96 |
| | nBA | 75.94 | 75.94 | 94.83 | 42.56 | 83.01 | 37.93 | 85.94 |
| | EHA | 64.45 | 64.45 | 132.27 | 38.07 | 7.00 | 52.91 | 64.45 |
| | HEMA | 105.00 | 105.00 | 116.00 | 90.00 | 162.40 | 46.40 | 105.00 |
| | AA | 20.00 | 33.00 | 22.00 | 14.00 | 25.69 | 22.00 | 12.00 |
| | Amount of initiator | 14.0 | 14.0 | 14.0 | 14.0 | 20.0 | 14.0 | 14.0 |
| DMEA | | 27.21 | 34.64 | 27.21 | 27.21 | 31.78 | 27.21 | 27.21 |
| Core wt% | | 50% | 50% | 50% | 70% | 30% | 80% | 50% |
| Total monomer acid value | | 17 | 27 | 17 | 17 | 20 | 17 | 17 |
| Core acid value | | 3 | 3 | 0 | 9 | 0 | 0 | 16 |
| Shell acid value | | 31 | 51 | 34 | 36 | 29 | 86 | 19 |
| Molecular weight | | 25000 | 25600 | 40000 | 23400 | 15000 | 23000 | 26200 |
| Tg | | 30 | 30 | -10 | 25 | 60 | 30 | 25 |
| Hydroxyl value | | 91 | 91 | 100 | 129 | 100 | 100 | 91 |
| Neutralization rate | | 100% | 80% | 100% | 100% | 100% | 100% | 100% |
| NV(%) | | 36.5 | 36.3 | 36.7 | 36.1 | 36.2 | 36.1 | 36.5 |
| Particle diameter (nm) | | 90 | 80 | 100 | 110 | 90 | 80 | 120 |

**[Table 2]**

| | | Acrylic resin dispersion (A) | | | | | Acrylic resin emulsion | Water-soluble acrylic resin |
|---|---|---|---|---|---|---|---|---|
| | | (8) | (9) | (10) | (11) | (12) | | |
| Overall | ST | 141.29 | 129.29 | 323.00 | 129.29 | 50.00 | 129.29 | 100.00 |
| | MMA | 357.92 | 357.92 | 347.00 | 357.92 | 298.61 | 357.92 | 198.92 |
| | nBA | 151.88 | 151.88 | 66.00 | 151.88 | 225.01 | 151.88 | 391.48 |
| | EHA | 128.91 | 128.91 | 10.00 | 128.91 | 155.86 | 128.91 | 13.40 |
| | HEMA | 210.00 | 210.00 | 232.00 | 210.00 | 231.98 | 210.00 | 231.98 |
| | AA | 10.00 | 22.00 | 22.00 | 22.00 | 38.53 | 22.00 | 64.22 |
| Core | ST | 75.65 | 73.65 | 172.50 | 73.65 | 0.00 | 75.65 | 0.00 |
| | MMA | 178.96 | 178.96 | 173.50 | 178.96 | 0.00 | 178.96 | 0.00 |
| | nBA | 75.94 | 75.94 | 33.00 | 75.94 | 0.00 | 75.94 | 0.00 |
| | EHA | 64.45 | 64.45 | 5.00 | 64.45 | 0.00 | 64.45 | 0.00 |
| | HEMA | 105.00 | 105.00 | 116.00 | 105.00 | 0.00 | 105.00 | 0.00 |
| | AA | 0.00 | 2.00 | 0.00 | 2.00 | 0.00 | 0.00 | 0.00 |
| | Methacrylic anhydride | 10 | 10 | 10 | 10 | 0 | 0 | 0 |
| | Amount of initiator | 70.0 | 30.0 | 70.0 | 70.0 | 0.0 | 1.5 | 0.0 |
| Shell | ST | 65.65 | 55.65 | 150.50 | 55.65 | 50.00 | 53.65 | 100.00 |
| | MMA | 178.96 | 178.96 | 173.50 | 178.96 | 298.61 | 178.96 | 198.92 |
| | nBA | 75.94 | 75.94 | 33.00 | 75.94 | 225.01 | 75.94 | 391.48 |
| | EHA | 64.45 | 64.45 | 5.00 | 64.45 | 155.86 | 64.45 | 13.40 |
| | HEMA | 105.00 | 105.00 | 116.00 | 105.00 | 231.98 | 105.00 | 231.98 |
| | AA | 10.00 | 20.00 | 22.00 | 20.00 | 38.53 | 22.00 | 64.22 |
| | Amount of initiator | 14.0 | 10.0 | 14.0 | 14.0 | 25.0 | 1.5 | 20.0 |
| DMEA | | 12.37 | 27.21 | 27.21 | 10.89 | 47.67 | 27.21 | 79.45 |
| Core wt% | | 50% | 50% | 50% | 50% | 0% | 50% | 0% |
| Total monomer acid value | | 8 | 17 | 17 | 17 | 30 | 17 | 50 |
| Core acid value | | 0 | 3 | 0 | 3 | 0 | 0 | 0 |
| Shell acid value | | 16 | 31 | 34 | 31 | 30 | 34 | 50 |
| Molecular weight | | 27300 | 80000 | 25200 | 25700 | 24000 | >100,000 | 30000 |
| Tg | | 25 | 25 | 70 | 25 | 0 | 25 | 10 |
| Hydroxyl value | | 91 | 91 | 100 | 91 | 100 | 91 | 100 |
| Neutralization rate | | 100% | 100% | 100% | 40% | 100% | 100% | 100% |
| NV(%) | | 36.4 | 36.2 | 36.8 | 36.1 | 30.0 | 35.0 | 30.0 |
| Particle diameter (nm) | | 180 | 130 | 100 | 170 | 190 | 150 | - |

**[Table 3]**

| | Example 1 | Example 2 | Example 3 | Example 4 | Example 5 | Example 6 | Example 7 |
|---|---|---|---|---|---|---|---|
| Coating material No. | 1 | 2 | 3 | 4 | 5 | 6 | 7 |
| Acrylic resin dispersion (A)(1) | 60 | | | | | 80 | |
| Acrylic resin dispersion (A)(2) | | 60 | | | | | 80 |
| Acrylic resin dispersion (A)(3) | | | 60 | | | | |
| Acrylic resin dispersion (A)(4) | | | | 60 | | | |
| Acrylic resin dispersion (A)(5) | | | | | 60 | | |
| Acrylic resin dispersion (A)(6) | | | | | | | |
| Acrylic resin dispersion (A)(7) | | | | | | | |
| Acrylic resin dispersion (A)(8) | | | | | | | |
| Acrylic resin dispersion (A)(9) | | | | | | | |
| Acrylic resin dispersion (A)(10) | | | | | | | |
| Acrylic resin dispersion (A)(11) | | | | | | | |
| Acrylic resin dispersion (A)(12) | | | | | | | |
| Acrylic resin emulsion | | | | | | | |
| Water-soluble acrylic resin | | | | | | | |
| Melamine resin (1) | 20 | 20 | 20 | 20 | 20 | 20 | 20 |
| Melamine resin (2) | | | | | | | |
| Melamine resin (3) | | | | | | | |
| Polyester resin dispersion | 10 | 10 | 10 | 10 | 10 | | |
| Polyurethane resin dispersion | 10 | 10 | 10 | 10 | 10 | | |
| η2/η1 | ⊚ | ⊚ | ○ | ○ | ○ | ⊚ | ⊚ |
| Layer miscibility (L value (15°) - L value (110°)) | ⊚ | ○ | ⊚ | ⊚ | ⊚ | ⊚ | ○ |
| Coating film appearance (SW (DRY) - SW (WET)) | ⊚ | ⊚ | ○ | ○ | ○ | ⊚ | ○ |

**[Table 4]**

| | Exampl e 8 | Exampl e 9 | Example 10 | Example 11 | Example 12 | Example 13 | Example 14 | Example 15 |
|---|---|---|---|---|---|---|---|---|
| Coating material No. | 8 | 9 | 10 | 11 | 12 | 13 | 14 | 15 |
| Acrylic resin dispersion (A)(1) | | | | 70 | 40 | 70 | 50 | 60 |
| Acrylic resin dispersion (A)(2) | | | | | | | | |
| Acrylic resin dispersion (A)(3) | 80 | | | | | | | |
| Acrylic resin dispersion (A)(4) | | 80 | | | | | | |
| Acrylic resin dispersion (A)(5) | | | 80 | | | | | |
| Acrylic resin dispersion (A)(6) | | | | | | | | |
| Acrylic resin dispersion (A)(7) | | | | | | | | |
| Acrylic resin dispersion (A)(8) | | | | | | | | |
| Acrylic resin dispersion (A)(9) | | | | | | | | |
| Acrylic resin dispersion (A)(10) | | | | | | | | |
| Acrylic resin dispersion (A)(11) | | | | | | | | |
| Acrylic resin dispersion (A)(12) | | | | | | | | |
| Acrylic resin emulsion | | | | | | | | |
| Water-soluble acrylic resin | | | | | | | | |
| Melamine resin (1) | 20 | 20 | 20 | 10 | 40 | 30 | 50 | |
| Melamine resin (2) | | | | | | | | 20 |
| Melamine resin (3) | | | | | | | | |
| Polyester resin dispersion | | | | 10 | 10 | | | 10 |
| Polyurethane resin dispersion | | | | 10 | 10 | | | 10 |
| η2/η1 | ○ | ○ | ○ | ⊚ | ⊚ | ⊚ | ⊚ | ⊚ |
| Layer miscibility (L value (15°) - L value (110°)) | ⊚ | ⊚ | ⊚ | ○ | ⊚ | ⊚ | ⊚ | ○ |
| Coating film appearance (SW (DRY) - SW (WET)) | ○ | ○ | ○ | ⊚ | ⊚ | ⊚ | ⊚ | ⊚ |

**[Table 5]**

| | Compara tive Example 1 | Compara tive Example 2 | Compara tive Example 3 | Compara tive Example 4 | Compara tive Example 5 | Compara tive Example 6 | Compara tive Example 7 | Compara tive Example 8 | Compara tive Example 9 |
|---|---|---|---|---|---|---|---|---|---|
| Coating material No. | 16 | 17 | 18 | 19 | 20 | 21 | 22 | 23 | 24 |
| Acrylic resin dispersion (A)(1) | | | 60 | | | | | | |
| Acrylic resin dispersion (A)(2) | | | | | | | | | |
| Acrylic resin dispersion (A)(3) | | | | | | | | | |
| Acrylic resin dispersion (A)(4) | | | | | | | | | |
| Acrylic resin dispersion (A)(5) | | | | | | | | | |
| Acrylic resin dispersion (A)(6) | | | | | 60 | | | | |
| Acrylic resin dispersion (A)(7) | | | | | | 60 | | | |
| Acrylic resin dispersion (A)(8) | | | | | | | 60 | | |
| Acrylic resin dispersion (A)(9) | | | | | | | | 60 | |
| Acrylic resin dispersion (A)(10) | | | | | | | | | 60 |
| Acrylic resin dispersion (A)(11) | | | | | | | | | |
| Acrylic resin dispersion (A)(12) | | | | 60 | | | | | |
| Acrylic resin emulsion | 60 | | | | | | | | |
| Water-soluble acrylic resin | | 60 | | | | | | | |
| Melamine resin (1) | 20 | 20 | | 20 | 20 | 20 | 20 | 20 | 20 |
| Melamine resin (2) | | | | | | | | | |
| Melamine resin (3) | | | 20 | | | | | | |
| Polyester resin dispersion | 10 | 10 | 10 | 10 | 10 | 10 | 10 | 10 | 10 |
| Polyurethane resin dispersion | 10 | 10 | 10 | 10 | 10 | 10 | 10 | 10 | 10 |
| η2/η1 | × | ○ | ⊚ | × | × | △ | × | × | × |
| Layer miscibility (L value (15°) - L value (110°)) | ○ | × | × | ○ | ○ | △ | ○ | ○ | ○ |
| Coating film appearance (SW (DRY) - SW (WET)) | × | ○ | ⊚ | × | × | △ | × | × | × |

**[Table 6]**

| | Compara tive Example 10 | Compara tive Example 11 | Compara tive Example 12 | Compara tive Example 13 | Compara tive Example 14 | Compara tive Example 15 | Compara tive Example 16 | Compara tive Example 17 | Compara tive Example 18 |
|---|---|---|---|---|---|---|---|---|---|
| Coating material No. | 25 | 26 | 27 | 28 | 29 | 30 | 31 | 32 | 33 |
| Acrylic resin dispersion (A)(1) | | | | | | | | | |
| Acrylic resin dispersion (A)(2) | | | | | | | | | |
| Acrylic resin dispersion (A)(3) | | | | | | | | | |
| Acrylic resin dispersion (A)(4) | | | | | | | | | |
| Acrylic resin dispersion (A)(5) | | | | | | | | | |
| Acrylic resin dispersion (A)(6) | 80 | | | | | 70 | 70 | 50 | |
| Acrylic resin dispersion (A)(7) | | 80 | | | | | | | |
| Acrylic resin dispersion (A)(8) | | | 80 | | | | | | |
| Acrylic resin dispersion (A)(9) | | | | 80 | | | | | |
| Acrylic resin dispersion (A)(10) | | | | | 80 | | | | |
| Acrylic resin dispersion (A)(11) | | | | | | | | | 60 |
| Acrylic resin dispersion (A)(12) | | | | | | | | | |
| Acrylic resin emulsion | | | | | | | | | |
| Water-soluble acrylic resin | | | | | | | | | |
| Melamine resin (1) | 20 | 20 | 20 | 20 | 20 | 10 | 30 | 50 | 20 |
| Melamine resin (2) | | | | | | | | | |
| Melamine resin (3) | | | | | | | | | |
| Polyester resin dispersion | | | | | | 10 | | | 10 |
| Polyurethane resin dispersion | | | | | | 10 | | | 10 |
| η2/η1 | × | △ | × | × | × | × | × | × | × |
| Layer miscibility (L value (15°) - L value (110°)) | ○ | △ | ○ | ○ | ○ | ○ | ○ | ○ | ○ |
| Coating film appearance (SW (DRY) - SW (WET)) | × | △ | × | × | × | × | × | × | × |

The components shown in the above tables are as follows.
- Melamine resin (2): hydrophobic melamine resin manufactured by Allnex, CYMEL 211
- Melamine resin (3): water-soluble melamine resin manufactured by Allnex, CYMEL 327

All of the aqueous coating compositions of the Examples were confirmed to exhibit a small viscosity change caused by change in solid content. Furthermore, all of the aqueous coating compositions of the Examples were reduced in generation of mix of layers between coating film layers, and were confirmed to be good in coating film appearance.

Comparative Example 1 is an example in which an acrylic resin emulsion was used instead of the acrylic resin dispersion. In this example, there was a large viscosity change caused by change in solid content, and the coating film appearance was also confirmed to be poor.

Comparative Example 2 is an example in which a water-soluble acrylic resin was used instead of the acrylic resin dispersion. In this example, generation of mix of layers between coating film layers was observed.

Comparative Example 3 is an example in which a water-soluble melamine resin was used instead of the hydrophobic melamine resin. In this example, generation of mix of layers between coating film layers was observed.

Comparative Example 4 is an example using an acrylic resin dispersion having no core/shell structure. In this example, there was a large viscosity change caused by change in solid content, and the coating film appearance was also confirmed to be poor.

Comparative Examples 5, 10, 15, 16 and 17 are examples in which the mass ratio of the acrylic resin dispersion is out of the range of core part/shell part = 30/70 to 70/30. Also in these examples, there was a large viscosity change caused by change in solid content, and the coating film appearance was also confirmed to be poor.

Comparative Examples 6 and 11 are examples in which the acid value of the core part of the acrylic resin dispersion is greater than 10 mg KOH/g. In these examples, there was a slightly large viscosity change caused by change in solid content, and the coating film appearance was also confirmed to be slightly poor.

Comparative Examples 7 and 12 are examples in which the acid value of the whole monomer mixture including the core part preparation monomer (a-1) and the shell part preparation monomer (a-2) is out of the range of 10 mg KOH/g or more and 30 mg KOH/g or less. In this example, there was a large viscosity change caused by change in solid content, and the coating film appearance was also confirmed to be poor.

Comparative Examples 8 and 13 are examples in which the weight-average molecular weight of the acrylic resin dispersion is greater than 70,000. In this example, there was a large viscosity change caused by change in solid content, and the coating film appearance was also confirmed to be poor.

Comparative Examples 9 and 14 are examples in which the glass transition temperature of the acrylic resin dispersion is higher than 60°C. In this example, there was a large viscosity change caused by change in solid content, and the coating film appearance was also confirmed to be poor.

Comparative Example 18 is an example in which the neutralization rate of the acid groups in the shell part of the acrylic resin dispersion is less than 50%. In this example, there was a large viscosity change caused by change in solid content, and the coating film appearance was also confirmed to be poor.

### INDUSTRIAL APPLICABILITY

The aqueous coating composition described above has the advantage that it exhibits a small viscosity change and coating can be performed without causing a large change in coating workability even when the amount of the solvent contained in the coating composition is reduced. The aqueous coating composition also has an advantage that deterioration in coating film appearance such as mix of layers can be reduced.

## Claims

1. An aqueous coating composition comprising an acrylic resin dispersion (A) and a melamine resin (B),
wherein
the acrylic resin dispersion (A) has a core/shell structure,
the acrylic resin dispersion (A) is a dispersion of a solution-polymerization product of a core part preparation monomer (a-1) and a shell part preparation monomer (a-2), wherein the shell part preparation monomer (a-2) includes an acid group-containing polymerizable monomer,
a mass ratio of a core part to a shell part of the acrylic resin dispersion (A) is in a range of core part/shell part = 30/70 to 70/30,
the shell part of the acrylic resin dispersion (A) has an acid group, and a neutralization rate of acid groups in the shell part is 50% or more,
a weight-average molecular weight of the acrylic resin dispersion (A) is in a range of 10,000 to 70,000,
the core part preparation monomer (a-1) has an acid value of 10 mg KOH/g or less, and the shell part preparation monomer (a-2) has an acid value of 10 mg KOH/g or more and 70 mg KOH/g or less,
a whole monomer mixture including the core part preparation monomer (a-1) and the shell part preparation monomer (a-2) has an acid value of 10 mg KOH/g or more and 30 mg KOH/g or less,
a glass transition temperature of the acrylic resin dispersion (A) is in a range of -10 to 60°C, and
the melamine resin (B) includes a hydrophobic melamine resin.

2. The aqueous coating composition according to claim 1, wherein
the whole monomer mixture including the core part preparation monomer (a-1) and the shell part preparation monomer (a-2) has a hydroxyl value of 50 mg KOH/g or more and 150 mg KOH/g or less,
the core part preparation monomer (a-1) has a hydroxyl value of 50 mg KOH/g or more and 150 mg KOH/g or less, and
the shell part preparation monomer (a-2) has a hydroxyl value of 50 mg KOH/g or more and 150 mg KOH/g or less.

3. The aqueous coating composition according to claim 1 or 2, further comprising one or more selected from the group consisting of a polyester resin dispersion and a polyurethane resin dispersion.

4. The aqueous coating composition according to any one of claims 1 to 3, wherein as to a viscosity of a dry coating film of the coating composition, viscosity η1 where a solid content in a dry coating film is 60% by mass and viscosity η2 where a solid content in a dry coating film is 90% by mass satisfy the following condition: $1 \leq η 2 / η 1 \leq 10 ,$ and
the viscosities η1 and η2 are viscosities measured at a temperature of 23°C and a shear rate of 0.1 sec⁻¹.

5. A method for producing an aqueous coating composition comprising an acrylic resin dispersion (A) having a core/shell structure and a melamine resin (B),
wherein
the acrylic resin dispersion (A) is produced through:
a step of solution-polymerizing a core part preparation monomer (a-1) to form a core part of the acrylic resin dispersion;
a step of solution-polymerizing, in the presence of the resulting core part, a shell part preparation monomer (a-2) including an acid group-containing polymerizable monomer to form a shell part of the acrylic resin dispersion; and
a step of desolvating the resulting solution-polymerization product, neutralizing it with a basic compound, and dispersing it in an aqueous medium,
a mass ratio of the core part to the shell part of the acrylic resin dispersion (A) is in a range of core part/shell part = 30/70 to 70/30,
the shell part of the acrylic resin dispersion (A) has acid groups, wherein a neutralization rate of acid groups in the shell part is 50% or more,
a weight-average molecular weight of the acrylic resin dispersion (A) is in a range of 10,000 to 70,000,
the core part preparation monomer (a-1) has an acid value of 10 mg KOH/g or less, and the shell part preparation monomer (a-2) has an acid value of 10 mg KOH/g or more and 70 mg KOH/g or less,
a whole monomer mixture including the core part preparation monomer (a-1) and the shell part preparation monomer (a-2) has an acid value of 10 mg KOH/g or more and 30 mg KOH/g or less,
a glass transition temperature of the acrylic resin dispersion (A) is in a range of -10 to 60°C, and
the melamine resin (B) includes a hydrophobic melamine resin.

6. A method for forming a multilayer coating film, comprising:
a step (1) of applying a first aqueous base coating composition onto a surface of an object to form an uncured first aqueous base coating film;
a step (2) of applying a second aqueous base coating composition onto the uncured first aqueous base coating film to form an uncured second aqueous base coating film;
a step (3) of applying a clear coating composition onto the uncured second aqueous base coating film to form an uncured clear coating film; and
a step (4) of heat-curing the uncured first aqueous base coating film, the uncured second aqueous base coating film, and the uncured clear coating film obtained in the steps (1) to (3) at a time to form a multilayer coating film, wherein
the first aqueous base coating composition is the aqueous coating composition according to any one of claims 1 to 4.

## Patentansprüche

1. Wässrige Beschichtungszusammensetzung, die eine Acrylharzdispersion (A) und ein Melaminharz (B) umfasst,
wobei
die Acrylharzdispersion (A) eine Kern/Hülle-Struktur aufweist,
die Acrylharzdispersion (A) eine Dispersion eines Lösungspolymerisationsprodukts eines Kernteilherstellungsmonomers (a-1) und eines Hüllenteilherstellungsmonomers (a-2) ist, wobei das Hüllenteilherstellungsmonomer (a-2) ein säuregruppenhältiges polymerisierbares Monomer umfasst,
ein Massenverhältnis eines Kernteils zu einem Hüllenteil der Acrylharzdispersion (A) in einem Bereich von Kernteil/Hüllenteil = 30/70 bis 70/30 liegt,
der Hüllenteil der Acrylharzdispersion (A) eine Säuregruppe aufweist und ein Neutralisationsgrad von Säuregruppen im Hüllenteil 50 % oder mehr beträgt,
ein gewichtsmittleres Molekulargewicht der Acrylharzdispersion (A) in einem Bereich von 10.000 bis 70.000 liegt,
das Kernteilherstellungsmonomer (a-1) eine Säurezahl von 10 mg KOH/g oder weniger aufweist und das Hüllenteilherstellungsmonomer (a-2) eine Säurezahl von 10 mg KOH/g oder mehr und 70 mg KOH/g oder weniger aufweist,
ein Gesamtmonomergemisch, das das Kernteilherstellungsmonomer (a-1) und das Hüllenteilherstellungsmonomer (a-2) umfasst, eine Säurezahl von 10 mg KOH/g oder mehr und 30 KOH/g oder weniger aufweist,
eine Glastemperatur der Acrylharzdispersion (A) in einem Bereich von -10 bis 60 °C liegt und
das Melaminharz (B) ein hydrophobes Melaminharz umfasst.

2. Wässrige Beschichtungszusammensetzung nach Anspruch 1, wobei das Gesamtmonomergemisch, das das Kernteilherstellungsmonomer (a-1) und das Hüllenteilherstellungsmonomer (a-2) umfasst, eine Hydroxylzahl von 50 mg KOH/g oder mehr und 150 mg KOH/g oder weniger aufweist,
das Kernteilherstellungsmonomer (a-1) eine Hydroxylzahl von 50 mg KOH/g oder mehr und 150 mg KOH/g oder weniger aufweist und
das Hüllenteilherstellungsmonomer (a-2) eine Hydroxylzahl von 50 mg KOH/g oder mehr und 150 mg KOH/g oder weniger aufweist.

3. Wässrige Beschichtungszusammensetzung nach Anspruch 1 oder 2, die außerdem eines oder mehrere umfasst, die aus der aus einer Polyesterharzdispersion und einer Polyurethanharzdispersion bestehenden Gruppe ausgewählt sind.

4. Wässrige Beschichtungszusammensetzung nach einem der Ansprüche 1 bis 3, wobei in Bezug auf eine Viskosität eines Trockenbeschichtungsfilms der Beschichtungszusammensetzung Viskosität η1, bei der ein Feststoffgehalt in einem Trockenbeschichtungsfilm 60 Massen-% beträgt, und Viskosität η2, bei der ein Feststoffgehalt in einem Trockenbeschichtungsfilm 90 Massen-% beträgt, die folgende Gleichung erfüllen: $1 \leq η 2 / η 1 \leq 10$ und
die Viskositäten η1 und η2 Viskositäten sind, die bei einer Temperatur von 23 °C und einer Scherrate von 0,1 s⁻¹ gemessen werden.

5. Verfahren zur Herstellung einer wässrigen Beschichtungszusammensetzung, die eine Acrylharzdispersion (A) mit einer Kern/Hülle-Struktur und ein Melaminharz (B) umfasst,
wobei
die Acrylharzdispersion (A) durch Folgendes hergestellt wird:
einen Schritt des Lösungspolymerisierens eines Kernteilherstellungsmonomers (a-1), um einen Kernteil der Acrylharzdispersion auszubilden;
einen Schritt des Lösungspolymerisierens eines Hüllenteilherstellungsmonomers (a-2), das ein säuregruppenhältiges polymerisierbares Monomer umfasst, in Gegenwart des resultierenden Kernteils, um einen Hüllenteil der Acrylharzdispersion auszubilden; und
einen Schritt des Desolvatisierens des resultierenden Lösungspolymerisationsprodukts, des Neutralisierens des Produkts mit einer basischen Verbindung und des Dispergierens des Produkts in einem wässrigen Medium,
wobei
ein Massenverhältnis des Kernteils zum Hüllenteil der Acrylharzdispersion (A) in einem Bereich von Kernteil/Hüllenteil = 30/70 bis 70/30 liegt,
der Hüllenteil der Acrylharzdispersion (A) Säuregruppen aufweist, wobei ein Neutralisationsgrad von Säuregruppen im Hüllenteil 50 % oder mehr beträgt,
ein gewichtsmittleres Molekulargewicht der Acrylharzdispersion (A) in einem Bereich von 10.000 bis 70.000 liegt,
das Kernteilherstellungsmonomer (a-1) eine Säurezahl von 10 mg KOH/g oder weniger aufweist und das Hüllenteilherstellungsmonomer (a-2) eine Säurezahl von 10 mg KOH/g oder mehr und 70 mg KOH/g oder weniger aufweist,
ein Gesamtmonomergemisch, das das Kernteilherstellungsmonomer (a-1) und das Hüllenteilherstellungsmonomer (a-2) umfasst, eine Säurezahl von 10 mg KOH/g oder mehr und 30 KOH/g oder weniger aufweist,
eine Glastemperatur der Acrylharzdispersion (A) in einem Bereich von -10 bis 60 °C liegt und
das Melaminharz (B) ein hydrophobes Melaminharz umfasst.

6. Verfahren zum Ausbilden eines Mehrschichtbeschichtungsfilms, das Folgendes umfasst:
einen Schritt (1) des Auftragens einer ersten wässrigen Grundbeschichtungszusammensetzung auf eine Oberfläche eines Objekts, um einen ungehärteten ersten wässrigen Grundbeschichtungsfilm auszubilden;
einen Schritt (2) des Auftragens einer zweiten wässrigen Grundbeschichtungszusammensetzung auf den ungehärteten ersten wässrigen Grundbeschichtungsfilm, um einen ungehärteten zweiten wässrigen Grundbeschichtungsfilm auszubilden;
einen Schritt (3) des Auftragens einer transparenten Beschichtungszusammensetzung auf den ungehärteten zweiten wässrigen Grundbeschichtungsfilm, um einen ungehärteten transparenten Beschichtungsfilm auszubilden; und
einen Schritt (4) des gleichzeitigen Wärmehärtens des ungehärteten ersten wässrigen Grundbeschichtungsfilms, des ungehärteten zweiten wässrigen Grundbeschichtungsfilms und des ungehärteten transparenten Beschichtungsfilms, die in den Schritten (1) bis (3) erhalten wurden, um einen Mehrschichtbeschichtungsfilm auszubilden, wobei
die erste wässrige Grundbeschichtungszusammensetzung eine wässrige Beschichtungszusammensetzung nach einem der Ansprüche 1 bis 4 ist.

## Revendications

1. Composition de revêtement aqueuse comprenant une dispersion de résine acrylique (A) et une résine de mélamine (B),
dans laquelle
la dispersion de résine acrylique (A) présente une structure coeur/coque,
la dispersion de résine acrylique (A) est une dispersion d'un produit de polymérisation en solution d'un monomère de préparation de partie de coeur (a-1) et d'un monomère de préparation de partie de coque (a-2), dans lequel le monomère de préparation de partie de coque (a-2) inclut un monomère polymérisable contenant un groupe acide,
un rapport de masse de la partie de coeur à la partie de coque de la dispersion de résine acrylique (A) est dans une plage de partie de coeur/partie de coque de 30/70 à 70/30,
la partie de coque de la dispersion de résine acrylique (A) présente un groupe acide, et un taux de neutralisation de groupes acides dans la partie de coque est de 50 % ou plus,
Un poids moléculaire moyen en poids de la dispersion de résine acrylique (A) est dans une plage de 10 000 à 70 000,
le monomère de préparation de partie de coeur (a-1) présente un indice d'acide de 10 mg KOH/g ou moins, et le monomère de préparation de partie de coque (a-2) présente un indice d'acide de 10 mg KOH/g ou plus et de 70 mg KOH/g ou moins,
un mélange de monomères entier incluant le monomère de préparation de partie de coeur (a-1) et le monomère de préparation de partie de coque (a-2) présente un indice d'acide de 10 mg KOH/g ou plus et de 30 mg KOH/g ou moins,
une température de transition vitreuse de la dispersion de résine acrylique (A) est dans une plage de -10 à 60°C, et
la résine de mélamine (B) inclut une résine de mélamine hydrophobe.

2. Composition de revêtement aqueuse selon la revendication 1, dans laquelle le mélange de monomères entier incluant le monomère de préparation de partie de coeur (a-1) et le monomère de préparation de partie de coque (a-2) présente un indice d'hydroxyle de 50 mg de KOH/g ou plus et de 150 mg de KOH/g ou moins,
le monomère de préparation de partie de coeur (a-1) présente un indice d'hydroxyle de 50 mg KOH/g ou plus et de 150 mg KOH/g ou moins, et
le monomère de préparation de partie de coque (a-2) présente un indice d'hydroxyle de 50 mg KOH/g ou plus et de 150 mg KOH/g ou moins.

3. Composition de revêtement aqueuse selon la revendication 1 ou 2, comprenant en outre une ou plusieurs choisies dans le groupe constitué d'une dispersion de résine de polyester et d'une dispersion de résine de polyuréthane.

4. Composition aqueuse de revêtement selon l'une quelconque des revendications 1 à 3, dans laquelle, en ce qui concerne la viscosité d'un film de revêtement sec de la composition de revêtement, la viscosité η1 où une teneur en solides dans un film de revêtement sec est de 60 % en masse et la viscosité η2 où une teneur en solides d'un film de revêtement sec est de 90 % en masse satisfont la condition suivante : $1 \leq 2 / 1 \leq 10 ,$ et
les viscosités η1 et η2 sont des viscosités mesurées à une température de 23°C et une vitesse de cisaillement de 0,1 sec⁻¹.

5. Procédé de production d'une composition aqueuse de revêtement comprenant une dispersion de résine acrylique (A) présentant une structure de coeur/coque et une résine de mélamine (B),
dans lequel
la dispersion de résine acrylique (A) est produite par :
une étape de polymérisation en solution d'un monomère de préparation de partie de coeur (a-l) pour former une partie de coeur de la dispersion de résine acrylique ;
une étape de polymérisation en solution, en présence de la partie de coeur résultante, d'un monomère de préparation de partie de coque (a-2) incluant un monomère polymérisable contenant un groupe acide pour former la partie de coque de la dispersion de résine acrylique ; et
une étape de désolvatation du produit de polymérisation en solution résultant, de neutralisation de celui-ci avec un composé basique, et de dispersion de celui-ci dans un milieu aqueux,
un rapport de masse de la partie de coeur à la partie de coque de la dispersion de résine acrylique (A) est dans une plage de partie de coeur/partie de coque de 30/70 à 70/30,
la partie de coque de la dispersion de résine acrylique (A) présente des groupes acides, dans lequel un taux de neutralisation de groupes acides dans la partie de coque est de 50 % ou plus,
Un poids moléculaire moyen en poids de la dispersion de résine acrylique (A) est dans une plage de 10 000 à 70 000,
le monomère de préparation de partie de coeur (a-1) présente un indice d'acide de 10 mg KOH/g ou moins, et le monomère de préparation de partie de coque (a-2) présente un indice d'acide de 10 mg KOH/g ou plus et de 70 mg KOH/g ou moins,
un mélange de monomères entier incluant le monomère de préparation de partie de coeur (a-1) et le monomère de préparation de partie de coque (a-2) présente un indice d'acide de 10 mg KOH/g ou plus et de 30 mg KOH/g ou moins,
une température de transition vitreuse de la dispersion de résine acrylique (A) est dans une plage de -10 à 60°C, et
la résine de mélamine (B) inclut une résine de mélamine hydrophobe.

6. Procédé de formation d'un film de revêtement multicouche, comprenant :
une étape (1) d'application d'une première composition de revêtement de base aqueuse sur une surface d'un objet pour former un premier film de revêtement à base aqueuse non durci ;
une étape (2) d'application d'une seconde composition de revêtement de base aqueuse sur le premier film de revêtement de base aqueuse non durci pour former un second film de revêtement de base aqueuse non durci ;
une étape (3) d'application d'une composition de revêtement transparente sur le second film de revêtement de base aqueuse non durci pour former un film de revêtement transparent non durci ; et
une étape (4) de durcissement thermique du premier film de revêtement de base aqueuse non durci, du second film de revêtement de base aqueuse non durci et du film de revêtement transparent non durci obtenu dans les étapes (1) à (3) à la fois pour former un film de revêtement multicouche, dans lequel
la première composition de revêtement de base aqueuse est la composition de revêtement aqueuse selon l'une quelconque des revendications 1 à 4.
